# EUROPEAN PATENT APPLICATION

(11) **EP 4 572 398 A1**
(43) Date of publication of application: **18.06.2025**
(21) Application number: 22954269.1
(22) Date of filing: 08.08.2022
(51) Int. Cl.: H04W 36/00

(54) **COMMUNICATION METHOD FOR NETWORK NODE, COMMUNICATION METHOD FOR MOBILE NODE, MOBILE NODE, AND DONOR DEVICE**

(71) Applicant: FUJITSU LIMITED, Kawasaki-shi, Kanagawa 211-8588 (JP)
(72) Inventor: YI, Su, Beijing 100022 (CN); LU, Yang, Beijing 100022 (CN); JIA, Meiyi, Beijing 100022 (CN)
(74) Representative: Haseltine Lake Kempner LLP
(86) International application number: PCT/CN2022/110976
(87) International publication number: WO 2024/031289

(57) **Abstract**

Embodiments of the present application provide a communication method for a network node, a communication method for a mobile node, a mobile node, and a donor device. The method includes: a first donor-CU receives first indication information, the first indication information including identity information related to a third donor-CU; and the first donor-CU transmits to the third donor-CU second indication information used for indicating the context of traffic.

## Description

### Technical Field

Embodiments of the present application relate to the field of communication.

### Background

Future seamless cellular network deployments require very flexible and ultra-dense new radio (NR) cell deployments, an ultra-dense network is one of the goals of 5G, and deploying a NR network that does not require wired backhaul is very important to achieve the ultra-dense network for 5G. Because 5G millimeter wave reduces a coverage of a cell, wireless self backhaul systems require multiple hops to meet deployment requirements. 5G's high bandwidth, large-scale multiple-input multiple-output (MIMO) and beam systems make it easier than LTE to develop wireless self backhaul systems for ultra-dense NR cells in 5G. In order to develop such a multi-hop system with wireless self backhaul, 3GPP began research and standardization of integrated access and backhaul (IAB) projects in Rel-16.

In an IAB system, the access and backhaul are transmitted wirelessly via a Uu air interface of NR. A relay node supports both access and backhaul functions, and the relay node multiplexes an access link and a backhaul link in a time domain, a frequency domain or a spatial domain, and the access link and the backhaul link may use the same or different frequency bands.

In an IAB network architecture, a relay node refers to an IAB-node that supports both the access and backhaul functions. The last hop access node on a network side is called an IAB-donor, which supports gNB function and supports IAB-node access. All UE data may be sent back to the IAB-donor via the IAB-node in one or more hops.

The function of the IAB-node is divided into two parts, one is the gNB-DU function, called an IAB-DU (distributed unit), and the other is the UE function, called an IAB-MT (mobile termination). IAB-DU implements network side device functions, serves one or more cells and is connected to a child IAB-node downstream (a child IAB node or a child node for short), provides NR air interface access for the UE and the child IAB-Node downstream and establishes F1 connection with the IAB donor-CU (donor central unit). The IAB-MT implements some terminal device functions and is connected to a parent IAB-node upstream (a parent IAB node or a parent node for short) or an IAB donor-DU. The IAB-MT includes physical layer, layer 2, RRC (Radio Resource Control) and NAS (Non-Access Stratum) layer functions, and is also indirectly connected to the IAB Donor-CU and a core network (CN).

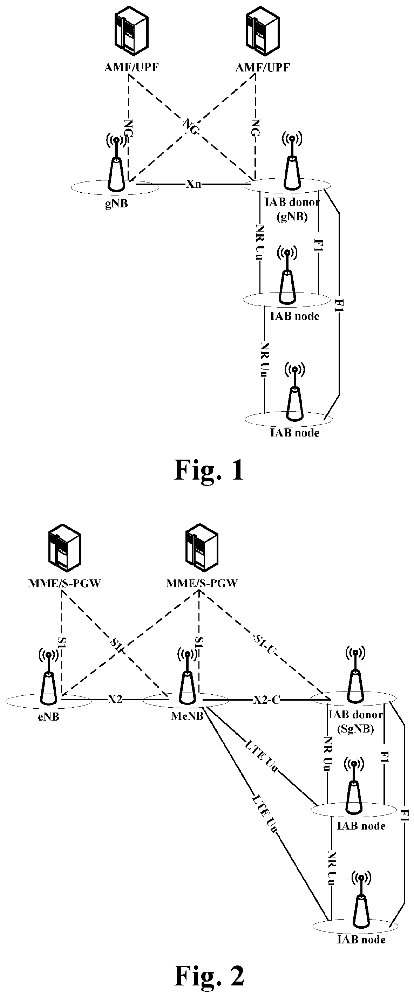

FIG. 1 is a schematic diagram of an IAB architecture in an SA mode. FIG. 2 is a schematic diagram of an IAB architecture in an EN-DC pattern. In the IAB system, the IAB-node may be connected to the network in either a standalone (SA) mode or an E-UTRA-NR Dual Connectivity (EN-DC) mode.

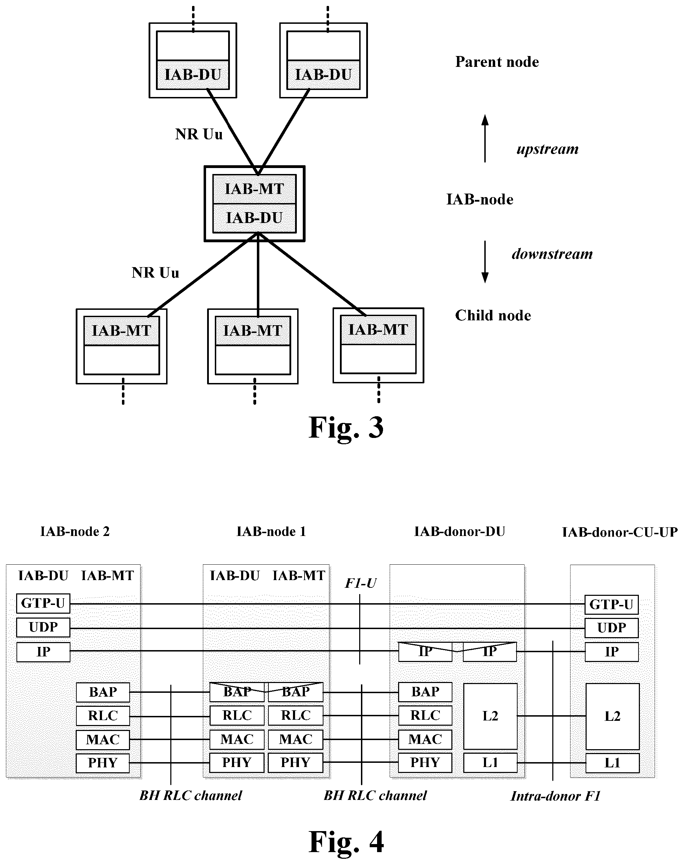

FIG. 3 is a schematic diagram of an IAB node with a parent node (parent IAB-node) and a child node (child IAB-node). As shown in FIG. 3, the IAB-DU of the IAB node is connected to the IAB-MT of the child node as the network side, and the IAB-MT of the IAB node is connected to the IAB-DU of the parent node as the terminal side.

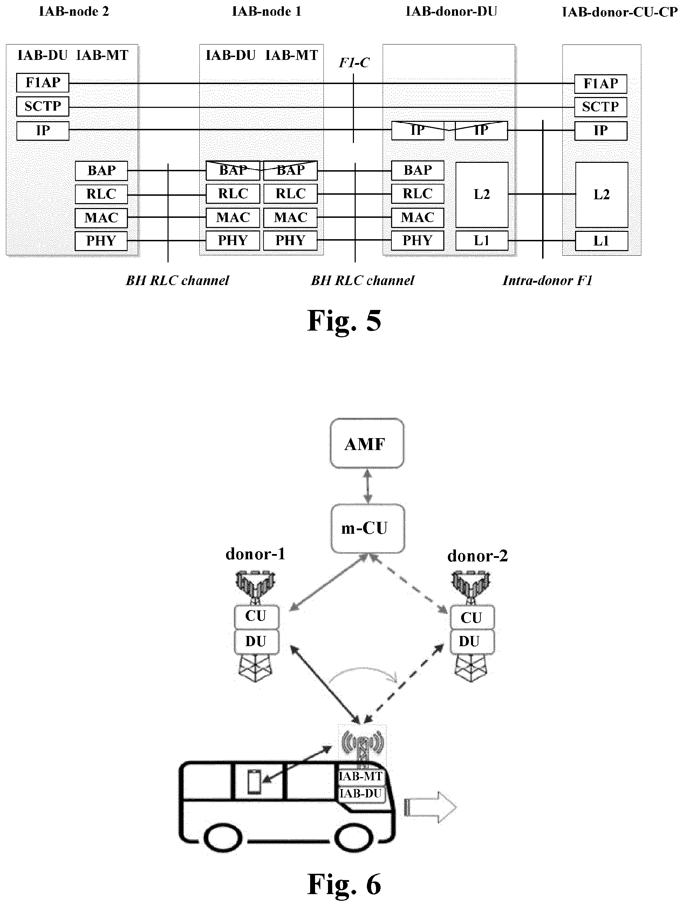

FIG. 4 is a schematic diagram of an F1 user plane (F1-U) protocol stack between an IAB-DU and an IAB donor-CU. FIG. 5 is a schematic diagram of an F1 control plane (F1-C) protocol stack between the IAB-DU and the IAB donor-CU. As shown in FIGs. 4 and 5, the F1-U and the F1-C are built on a transmission (IP) layer between the IAB-DU and the IAB donor-CU, with two-hop wireless backhaul and one-hop wired backhaul in FIGs. 4 and 5.

On the backhaul link, the transmission (IP) layer is carried on a backhaul adaption protocol (BAP) sublayer. A BAP entity in the IAB-node implements a routing function of the IAB system, and a routing table is provided by the IAB donor-CU. A BAP PDU (protocol data unit) is transmitted in an RLC (radio link control) channel of the backhaul link. Multiple RLC channels of the backhaul link may be configured by the IAB-donor to carry services with different priorities and QoSs (quality of service). The BAP entity maps the BAP PDU to different backhaul RLC channels.

It should be noted that, the above introduction to the background is merely for the convenience of clear and complete description of the technical solution of the present application, and for the convenience of understanding of persons skilled in the art. It cannot be regarded that the above technical solution is commonly known to persons skilled in the art just because that the solution has been set forth in the background of the present application.

### Summary

The inventor has found that at present it has been proposed that mobile nodes may be moved within a donor-CU, but exactly how to perform migration, handover and/or radio link failure (RLF) recovery has not been defined and supported.

In order to solve at least one of the above problems, embodiments of the present application provide a communication method for a network node, a communication method for a mobile node, a mobile node, and a donor device.

According to one aspect of the embodiments of the present application, a communication method for a network node is provided, wherein a first donor-CU is an F1-terminating donor-CU of a mobile node, a second donor-CU is a non-F1-terminating donor-CU before migration or radio link failure (RLF) recovery of the mobile node, and a third donor-CU is a non-F1-terminating donor-CU after migration or RLF recovery of the mobile node;
the method including:
the first donor-CU receives first indication information, the first indication information including identity information related to the third donor-CU; and
the first donor-CU transmits second indication information for indicating a context of a traffic to the third donor-CU.

According to another aspect of the embodiments of the present application, a donor device is provided, wherein the donor device is an F 1-terminating donor-CU of a mobile node, a second donor-CU is a non-F1-terminating donor-CU before migration or radio link failure (RLF) recovery of the mobile node, and a third donor-CU is a non-F1-terminating donor-CU after migration or RLF recovery of the mobile node;
and the donor device includes:
a receiving portion configured to receive first indication information, the first indication information including identity information related to the third donor-CU; and
a transmitting portion configured to transmit second indication information for indicating a context of a traffic to the third donor-CU.

According to another aspect of the embodiments of the present application, a communication method for a network node is provided, wherein a first donor-CU is an F1-terminating donor-CU of a mobile node, a second donor-CU is a non-F 1-terminating donor-CU before migration or radio link failure (RLF) recovery of the mobile node, and a third donor-CU is a non-F1-terminating donor-CU after migration or RLF recovery of the mobile node;
the method including:
the second donor-CU transmits first indication information to the first donor-CU, the first indication information including identity information related to the third donor-CU.

According to another aspect of the embodiments of the present application, a donor device is provided, wherein a first donor-CU is an F1-terminating donor-CU of a mobile node, the donor device is a non-F1-terminating donor-CU before migration or radio link failure (RLF) recovery of the mobile node, and a third donor-CU is a non-F1-terminating donor-CU after migration or RLF recovery of the mobile node;
and the donor device includes:
a transmitting portion configured to transmit first indication information to the first donor-CU, the first indication information including identity information related to the third donor-CU.

According to another aspect of the embodiments of the present application, a communication method for a network node is provided, wherein a first donor-CU is an F1-terminating donor-CU of a mobile node, a second donor-CU is a non-F 1-terminating donor-CU before migration or radio link failure (RLF) recovery of the mobile node, and a third donor-CU is a non-F1-terminating donor-CU after migration or RLF recovery of the mobile node;
the method including:
the third donor-CU receives second indication information used for indicating a context of a traffic and transmitted by the first donor-CU according to identity information, wherein the identity information is related to the third donor-CU and is contained in the first indication information received by the first donor-CU.

According to another aspect of the embodiments of the present application, a donor device is provided, wherein a first donor-CU is an F 1-terminating donor-CU of a mobile node, a second donor-CU is a non-F1-terminating donor-CU before migration or radio link failure (RLF) recovery of the mobile node, and the donor device is a non-F1-terminating donor-CU after migration or RLF recovery of the mobile node;
and the donor device includes:
a receiving portion configured to receive second indication information used for indicating a context of a traffic and transmitted by the first donor-CU according to identity information, wherein the identity information is related to the third donor-CU and is contained in the first indication information received by the first donor-CU.

One of the beneficial effects of the embodiments of the present application includes: the first donor-CU receives first indication information, the first indication information including identity information related to a third donor-CU; and the first donor-CU transmits to the third donor-CU second indication information used for indicating the context of traffic according to the identity information. Therefore, mobile nodes can be supported to move in a control area without service interruption, and a quality of service of mobile nodes for user equipments is guaranteed.

With reference to the specification and drawings below, a specific embodiment of the present application is disclosed in detail, which specifies the manner in which the principle of the present application may be adopted. It should be understood that, the scope of the embodiment of the present application is not limited. Within the scope of the clause of the appended supplements, the embodiments of the present application include many variations, modifications and equivalents.

The features described and/or shown for one embodiment may be used in one or more other embodiments in the same or similar manner, may be combined with the features in other embodiments or replace the features in other embodiments.

It should be emphasized that, the term "include/comprise" refers to, when being used in the text, existence of features, parts, steps or assemblies, without exclusion of existence or attachment of one or more other features, parts, steps or assemblies.

### Brief Description of the Drawings

Elements and features described in one of the drawings or embodiments of the present application may be combined with the elements and features shown in one or more other drawings or embodiments. Moreover, in the drawings, similar reference signs indicate corresponding parts in several drawings and may be used to indicate corresponding parts used in more than one embodiment.

The included drawings are used for providing further understanding on the embodiment of the present application, constitute a portion of the Description, are used for illustrating the embodiment of the present application and explain the principle of the present application together with the literary description. Obviously, the drawings described below are merely some examples of the present application, persons ordinarily skilled in the art may also obtain other drawings according to these drawings without making creative efforts. In the drawings:
FIG. 1 is a schematic diagram of an IAB architecture in an SA mode;
FIG. 2 is a schematic diagram of an IAB architecture in an EN-DC mode;
FIG. 3 is a schematic diagram of a parent IAB-node and a child IAB-node;
FIG. 4 is a schematic diagram of an F1-U protocol stack of the IAB system;
FIG. 5 is a schematic diagram of an F1-C protocol stack of the IAB system;
FIG. 6 is a schematic diagram of a mobility scenario of the embodiment of the present application;
FIG. 7 is a schematic diagram of topological adaptation within m-CU in the embodiment of the present application;
FIG. 8 is a schematic diagram of a communication method for a network node in the embodiment of the present application;
FIG. 9 is a signaling process chart of topological adaptation in the embodiment of the present application;
FIG. 10 is another signaling process chart of topological adaptation in the embodiment of the present application;
FIG. 11 is another signaling process chart of topological adaptation in the embodiment of the present application;
FIG. 12 is a signaling process chart of RLF recover y in the embodiment of the present application;
FIG. 13 is a schematic diagram of a communication method for a network node in the embodiment of the present application;
FIG. 14 is a schematic diagram of a communication method for a network node in the embodiment of the present application;
FIG. 15 is a schematic diagram of a communication method for a mobile node in the embodiment of the present application;
FIG. 16 is a schematic diagram of a donor device in the embodiment of the present application;
FIG. 17 is a schematic diagram of a donor device in the embodiment of the present application;
FIG. 18 is a schematic diagram of a donor device in the embodiment of the present application;
FIG. 19 is a schematic diagram of a mobile node in the embodiment of the present application; and
FIG. 20 is a schematic diagram of an IAB device in the embodiment of the present application.

### Detailed Description

With reference to the drawings, the foregoing and other features of the present application will become apparent through the following specification. The specification and drawings specifically disclose the particular embodiment of the present application, showing part of the embodiment in which the principle of the present application may be adopted, it should be understood that the present application is not limited to the described embodiment, on the contrary, the present application includes all modifications, variations and equivalents that fall within the scope of the appended supplements.

In embodiments of the present application, the terms "first", "second", etc., are used to distinguish different elements by their appellation, but do not indicate the spatial arrangement or chronological order of these elements, etc., and these elements shall not be limited by the terms. The term "and/or" includes any and all combinations of one or more of the terms listed in association with the term. The terms "contain", "include", "have", etc., refer to the presence of the stated feature, element, component or assembly, but do not exclude the presence or addition of one or more other features, elements, components or assemblies.

In the embodiments of the present application, the singular forms "one", "the", etc., including the plural forms, shall be broadly understood as "a sort of" or "a kind of" and not limited to the meaning of "one"; furthermore, the term "said" shall be understood to include both the singular form and the plural form, unless it is expressly indicated otherwise in the context. In addition, the term "according to" should be understood to mean "at least partially according to ...", and the term "based on" should be understood to mean "based at least partially on ...", unless it is expressly indicated otherwise in the context.

In embodiments of the present application, the term "communications network" or "wireless communications network" may refer to a network that complies with any of the following communication standards, such as New Radio (NR), Long Term Evolution (LTE), Enhanced Long Term Evolution (LTE-A), Wideband Code Division Multiple Access (WCDMA), High-Speed Packet Access (HSPA), etc.

In addition, the communication between the devices in the communication system may be carried out according to the communication protocol of any stage, for example, including but not being limited to 1G (generation), 2G, 2.5G, 2.75G, 3G, 4G, 4.5G and future 5G, 6G, etc., and/or other communication protocols currently known or to be developed in the future.

In the embodiments of the present application, the term "network device" refers to, for example, a device in the communication system that connects a terminal equipment to the communication network and provides services to the terminal equipment. The network device may include but is not limited to: a base station (BS), an access point (AP), a transmission reception point (TRP), a broadcast transmitter, a mobile management entity (MME), a gateway, a server, a radio network controller (RNC), a base station controller (BSC), etc.

The base station may include, but is not limited to, a node B (NodeB or NB), an evolution node B (eNodeB or eNB), 5G base station (gNB), an IAB donor, etc., and may also include a remote radio head (RRH), a remote radio unit (RRU), a relay, or a low-power node (such as femto, pico, etc.). And the term "base station" may include some or all of their functions, with each base station providing communication coverage to a specific geographic area. The term "cell" may refer to a base station and/or its coverage area, depending on the context in which the term is used.

In the embodiments of the present application, the term "user equipment" (UE) refers, for example, to a device that is connected to the communication network through the network device and receives network services, and may also be referred to as "Terminal Equipment" (TE). The terminal device may be fixed or movable, and may also be called a mobile station (MS), a terminal, a user, a subscriber station (SS), an access terminal (AT), a station, etc.

The terminal equipment may include but is not limited to: a cellular phone, a personal digital assistant (PDA), a wireless modems, a wireless communication device, a handheld device, a machine-type communication device, a laptop computer, a cordless phone, a smart phone, a smart watch, a digital camera, etc.

For another example, in scenarios such as Internet of Things (IoT), the terminal equipment may also be a machine or an apparatus that performs monitoring or measurement, and may include, but is not limited to, a machine type communication (MTC) terminal, a vehicle communication terminal, a device to device (D2D) terminal, a machine to machine (M2M) terminal, and etc.

At present, there is an increasing demand for performance improvements in 5G cellular coverage and connectivity, which is more challenging especially in many outdoor and mobile scenarios. In some outdoor environments, vehicles equipped with mobile base station relays (such as mobile IAB) may provide a high chance of improving cellular coverage and capacity when and where needed. These vehicles either follow a known or predictable route, such as buses, trams; or are placed at a convenient location, such as outside a stadium, a hot spot, or an emergency scene.

These relays use 5G wireless backhaul to the macro network to really provide better 5G coverage and connectivity to neighboring UEs. Vehicle relay is also clearly suitable for improving connectivity performance of users or devices in their own vehicles, including passengers in buses, cars, taxis or trains, temporary/professional personnel or equipment. Other target scenarios include vehicle relays that may be used to serve user equipment with no or very poor macro coverage. A moving vehicle is equipped with a small on-board base station relay to provide 5G coverage and communication to adjacent UEs inside and/or outside the vehicle, and to be wirelessly connected to the 5G network via RAN (donor) nodes.

Taking an IAB node as an example, the IAB-MT may be migrated to a parent node under a different IAB-donor-CU. In this case, the co-located IAB-DU and the IAB-DU of a descendant node maintain the F1 connection to the original IAB-donor-CU. Such migration is called inter-donor partial migration. The IAB node where this IAB-MT migrates to the new IAB-donor-CU is a boundary IAB node. After inter-donor partial migration, F1 traffic of the IAB-DU and the descendant node is routed via the BAP layer of the IAB topology to which the IAB-MT is migrated.

When the IAB node in an SA mode declares a backhaul link RLF, it may perform RLF recovery at the parent nodes under different IAB-donor-CUs. Like the inter-donor partial migration, the co-located IAB-DU and the IAB-DU of a descendant node may maintain the F1 connection to the original IAB-donor-CU.

A challenge of mobility for a mobile IAB (mIAB) or a mobile relay in a large area is that when it changes an IAB donor, both packet data convergence protocol (PDCP) and RRC connection of the UE it serves will be affected. As a result, the UE in a vehicle, even at rest, may experience significant signaling overhead due to mobility in an idle state (because TA values need to be adjusted to new values assigned by a gNB, changing a PDCP endpoint and safety for the user plane) and a connected state.

FIG. 6 is a schematic diagram of a mobility scenario of the embodiments of the present application. As shown in FIG. 6, if the DU of mIAB is served by a CU covering a larger area, a root cause of these mobility related signalings may be eliminated. To put it simply, it is an advanced approach to provide a dedicated mobile control unit (which may be called m-CU) for the mIAB donor function to control the UE connected to the mIAB. This allows the mIAB to move over a considerable area of RAN coverage without changing the m-CU. Therefore, the movement of mIAB between IAB donors may be invisible to the UEs connected to the mIAB, as long as a controller is located within the same m-CU.

However, when the m-CU does not change, how to achieve IAB mobility within the m-CU (intra-m-CU), that is, mIAB migration and RLF recovery have not been defined and supported. The embodiments of the present application relate to a partial migration process of mIAB within m-CU, that is, a topological adaptation process within m-CU.

In the embodiments of the present application, m-CU may be a dedicated IAB-donor-CU, that is, an F1-terminating donor-CU of the IAB node or the IAB-DU. The partial migration of an IAB node within an m-CU means that the IAB-MT may be migrated to a different IAB-donor-CU or the parent node under it. In this case, the RRC connection of the IAB-MT is migrated from a source IAB-donor-CU to a target IAB-donor-CU, and the co-located IAB-DU maintains the F1 connection with the original IAB-donor-CU (i.e., m-CU).

While the mIAB is moving, the IAB-MT may migrate continuously to a different IAB-donor-CU or a parent node under it. The F1 traffic of IAB-DU is routed via the BAP layer of the IAB topology to which the IAB-MT is migrated. Similarly, when the mIAB node declares the backhaul link RLF, it may perform RLF recovery at the parent nodes under different IAB-donor-CUs. Like the partial migration within m-CU, the co-located IAB-DU may maintain the F1 connection with the original m-CU. If the source IAB-donor-CU of the mIAB-MT is m-CU, the migration process within the m-CU of the mIAB is the partial migration /RLF recovery process defined by Rel-17.

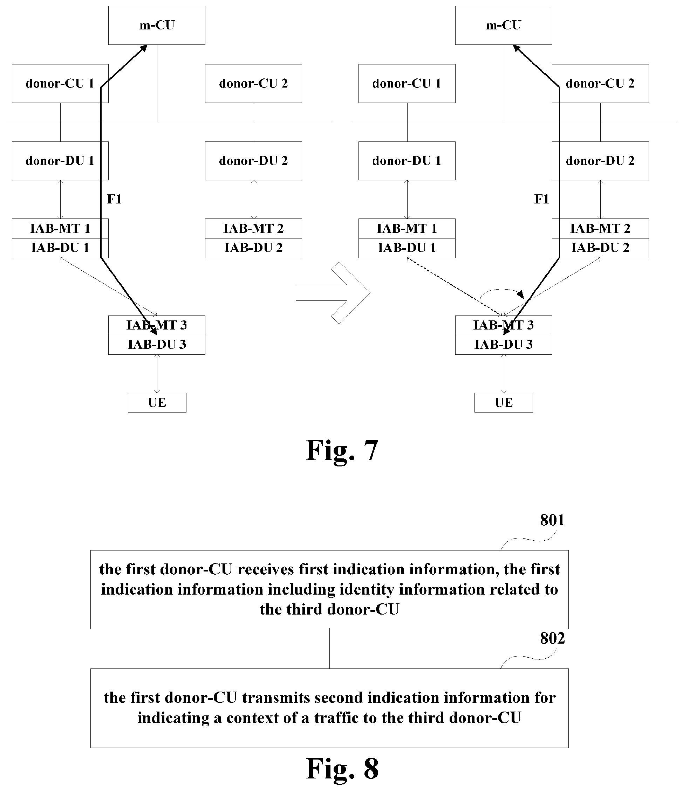

FIG. 7 is a schematic diagram of topological adaptation within m-CU in the embodiments of the present application. As shown in FIG. 7, if the source IAB-donor-CU of the mIAB is not m-CU, the migration process within the m-CU of the mIAB may also be considered as a partial migration process between non-F1-terminating donors, that is, the process of changing the non-F1-terminating donors.

In the embodiments of the present application, an IAB node device refers to a migrating node or its child node(s) unless otherwise stated. In addition, a mobile node is not limited to an IAB node, and for example, for a relay, Network-controlled repeater (NCR) is also applicable.

Hereinafter the embodiments of the present application are described further.

### Embodiments of the first aspect

The embodiments of the present application provide a communication method for a network node, illustrated from a first donor-CU side. The first donor-CU is an F1-terminating donor-CU of a mobile node; a second donor-CU is a non-F1-terminating donor-CU before migration or radio link failure (RLF) recovery of the mobile node, also known as a source donor-CU or an original donor-CU; and a third donor-CU is a non-F1-terminating donor-CU after migration or RLF recovery of the mobile node, also known as a target donor-CU or a new donor-CU.

FIG. 8 is a schematic diagram of a communication method for a network node in the embodiments of the present application, as shown in FIG. 8, the method including:
801: the first donor-CU receives first indication information, the first indication information including identity information related to the third donor-CU; and
802: the first donor-CU transmits second indication information for indicating a context of a traffic to the third donor-CU.

It is worth noting that FIG. 8 above only schematically illustrates the embodiments of the present application, but the present application is not limited to this. For example, the order of execution between operations may be adjusted appropriately, and some other operations may be added or one or more operations may be removed. Those skilled in the art may make appropriate variations in accordance with the above contents, and which is not limited to the disclosure of FIG. 8 above.

In some embodiments, the first donor-CU is an F1-terminating donor-CU of a plurality of mobile nodes in a designated area; F1 connection of the plurality of mobile nodes always terminates at the first donor-CU. That is, the first donor-CU is m-CU as shown in FIG. 7.

Taking FIG. 7 as an example, during topological adaptation in m-CU, the IAB node 3 (mobile node) performs topological adaptation in m-CU. In the left topology of FIG. 7, the IAB node 3 is connected to IAB-donor 1 (a collective term for donor-CU 1 and donor-DU 1 in FIG. 7, FIG. 7 shows the separation of CU-DU; it may also be a centralized situation, where CU and DU are at the same node) through a parent IAB node 1 (parent IAB node 1 is not mandatory, and IAB node 3 may also be directly connected to the IAB-donor), that is, the source IAB-donor of IAB-MT 3 is the IAB-donor 1 (second donor-CU), which means that an RRC connection termination of IAB-MT 3 is the IAB-donor 1. The IAB-donor 1 is also called a non-F1-terminating donor of the IAB node 3. The F1-terminating donor of the IAB node 3 is m-CU (first donor-CU) in FIG. 7. F1 traffic of IAB-DU 3, i.e., UE traffic of IAB node 3, reaches m-CU via IAB-MT 3 and IAB-donor 1.

During the mobility of the IAB node 3, the IAB node 3 is migrated as illustrated in the right topology of FIG. 7. The IAB node 3 is connected to IAB-donor 2 (a collective term of a donor-CU 2 and a donor-DU 2 in FIG. 7) through a parent node, IAB node 2 (a parent node, i.e., IAB node 2, is not mandatory and the IAB node 3 may also be connected directly to the IAB-donor). That is, the target IAB-donor of IAB-MT 3 is the IAB-donor 2 (third donor-CU), which means that an RRC connection termination of IAB-MT 3 is the IAB donor 2. The IAB-donor 2 becomes a non-F1-terminating donor of the IAB node 3. The F1-terminating donor of the IAB node 3 is still m-CU in FIG. 7. F1 traffic of IAB-DU 3, i.e., UE traffic of IAB node 3, reaches m-CU via IAB-MT 3 and IAB-donor 2.

In some embodiments, the first donor-CU receives mobile node's address information anchored at the donor-DU (e.g., donor-DU 2 in FIG. 7) of the third donor-CU sent by the mobile node.

In some embodiments, the second indication information is transmitted via a transport migration management request message, and the second indication information includes downlink address information so that the third donor-CU configures or modifies downlink mapping.

In some embodiments, the first donor-CU receives a transport migration management response message transmitted by the third donor-CU, the transport migration management response message including mapping information of a traffic to be offloaded and/or layer 2 information in a topology of the third donor-CU.

In some embodiments, the first donor-CU transmits uplink backhaul information of the traffic to the mobile node.

Hereinbefore inter-donor partial migration is schematically illustrated, and the first indication information is explained below.

In some embodiments, the first indication information is transmitted by the second donor-CU via a transport migration modification request message; and the first donor-CU transmits a transport migration modification response message to the second donor-CU.

The transport migration modification request message includes a target cell global identity of the mobile node or a global node identity of a target donor node. For example, the target cell global identity of the mobile node or the global node identity of the target donor node being contained in a traffic to be released information element carried by the transport migration modification request message.

In addition, the transport migration modification request message may further include a traffic release cause. The traffic release cause including that the mobile node performs inter-donor handover, or that the mobile node performs inter-donor radio link failure (RLF) recovery.

The topological adaptation process of the embodiments of the present application is further illustrated by signaling interaction.

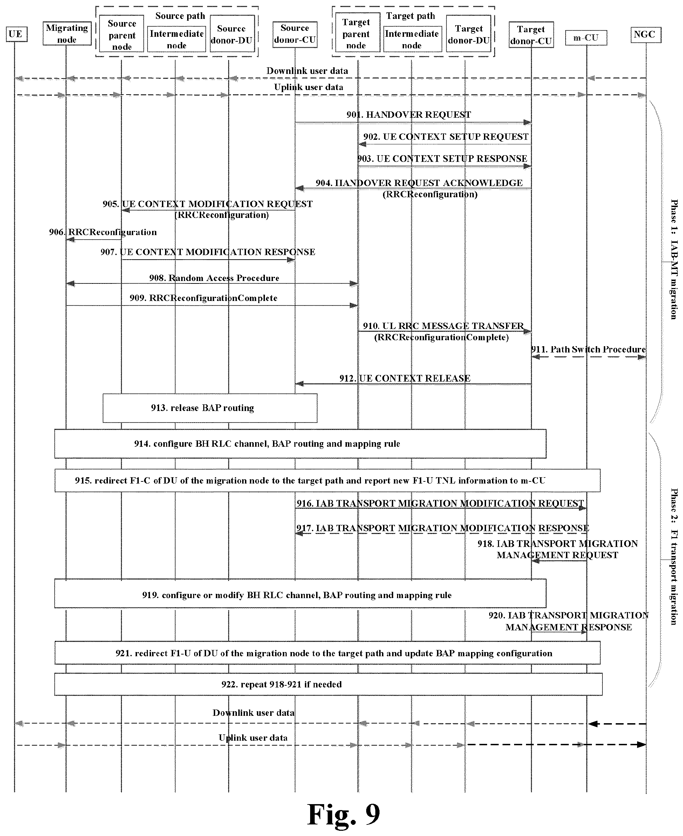

FIG. 9 is a signaling process chart of topological adaptation in the embodiments of the present application.

As shown in FIG. 9, a migrating IAB node (the aforementioned IAB node 3) has changed the non-F1-terminating donor, maintaining the F1-terminating donor. In FIG. 9, it is assumed that the migrating node has a parent node in both the source and target paths and an intermediate node between the parent node and the IAB-donor. These nodes may not exist, in which case the parent node of the migrating node is the IAB-donor.

As shown in FIG. 9, the process includes:
901: the source IAB-donor-CU transmits an Xn HANDOVER REQUEST message to the target IAB-donor-CU. This message may contain TNL (transport network layer) address information of the migrating IAB node in an RRC container.
902: the target IAB-donor-CU transmits a UE CONTEXT SETUP REQUEST message to the IAB-DU of the target parent node to create the UE context for the migrating IAB-MT, as well as to establish the signaling and optionally data bearers for the migrating IAB-MT.
903: the IAB-DU of the target parent node replies with a UE CONTEXT SETUP RESPONSE message to the target IAB-donor-CU.
904: the target IAB-donor-CU performs admission control and provides new RRC configuration as part of a HANDOVER REQUEST ACKNOWLEDGE message. The RRC configuration contains a BAP address of the migrating node in the topology of the target IAB-donor-CU, the default BH RLC channel, and the default BAP routing identity configuration for uplink F1-C/ non-F1 traffic mapping on the target path. The RRC configuration may contain new (one or more) TNL addresses anchored at the target IAB-donor-DU for the migrating node.
905: the source IAB-donor-CU transmits a UE CONTEXT MODIFICATION REQUEST message to the IAB-DU of the source parent node, which contains the RRCReconfiguration message received from the target IAB-donor-CU.
906: the IAB-DU of the source parent node forwards the received RRCReconfiguration message to the migrating IAB-MT.
907: the IAB-DU of the source parent node replies with the UE CONTEXT MODIFICATION RESPONSE message to the source IAB-donor-CU.
908: the migrating IAB-MTperforms a random access process to the IAB-DU of the target parent node.
909: the migrating IAB-MT responds a RRCReconfigurationComplete message to the IAB-DU of the target parent node.
910: the IAB-DU of the target parent node transmits a UL RRC MESSAGE TRANSFER message to the target IAB-donor-CU, to convey the received RRCReconfigurationComplete message.
911: if needed, the target IAB-donor-CU triggers a path switching process for the migrating IAB-MT.
912: the target IAB-donor-CU transmits a UE CONTEXT RELEASE message to the source IAB-donor-CU.

If the source IAB-donor-CU is m-CU, both the source IAB-donor-CU and the target IAB-donor-CU need to save the XnAP UE ID of the migrating node as long as the target path is used to transport traffic between the migrating node and the source IAB-donor-CU. If the source IAB-donor-CU is not m-CU, the target path does not need to transport traffic between the migrating node and the source IAB-donor-CU (that is, the traffic of the migrating node does not pass via the source IAB-donor-CU), and the source IAB-donor-CU may release the XnAP UE ID of the migrating node.

913: the source IAB-donor-CU may release the BH RLC channel and route entries of the BAP sublayer on the source path from the source parent node of the migrating IAB node to the source IAB-donor-DU.

914: the target IAB-donor-CU configures the BH RLC channel and the routing entries of the BAP sublayer on the target path from the migrating IAB node to the target IAB-donor-DU, as well as the downlink mapping about the target path of the migrating IAB node on the target IAB-donor-DU. These configurations support the transport of F1-C traffic on the target path.

915: the F1-C connection between the migrating IAB node and m-CU is switched to the target path by using the new TNL address information of the migrating IAB node. The migrating IAB node may report the new TNL address it wants to use for F1-U traffic to m-CU via the gNB-DU CONFIGURATION UPDATE message.

If an IPsec tunnel is used for TNL protection, the migrating IAB node may use MOBIKE (IETF RFC 4555) to migrate the IPsec tunnel to the new IP outer address. After the MOBIKE process is completed, the migrated IAB-DU initiates the F1AP gNB-DU Configuration Update procedure, and during the procedure, IAB-donor-CU may obtain whether the existing inner IP address (such as for SCTP-stream control transmission protocol association) and downlink F-TEID (Fully qualified Tunnel Endpoint Identifier) can be reused.

If a new TNL address is configured for F1-C traffic, the new TNL address information of the migrated IAB may be used to create a new SCTP association between the migrating IAB node and F1-terminating IAB-donor-CU. The migrating IAB node transmits the F1AP gNB-DU CONFIGURATION UPDATE message to the F 1-terminating IAB-donor-CU (m-CU), and the message may contain the new (outer) IP address and the corresponding new (inner) IP address for switching F 1-U traffic to the target path.

916: the source IAB-donor-CU transmits an IAB TRANSPORT MIGRATION MODIFICATION REQUEST message to m-CU to request to release all the offloaded traffic. This message may contain node ID (or target cell ID) of the target IAB-donor-CU, the cause for traffic offloading and release, and so on.

917: m-CU replies with an IAB TRANSPORT MIGRATION MODIFICATION RESPONSE message to the source IAB-donor-CU.

918: m-CU transmits the IAB TRANSPORT MIGRATION MANAGEMENT REQUEST message to the target IAB-donor-CU to provide context for the traffic that needs to be offloaded. This message may contain new downlink TNL address information, which is used for the target IAB-donor-CU to configure or modify the downlink mapping on the IAB-donor-DU.

919: the target IAB-donor-CU may configure or modify the BH RLC channel and the routing entries of the BAP sublayer from the migrating IAB node to the target IAB-donor-CU on the target path, as well as the downlink mapping about the target path of the migrating IAB node on the target IAB-donor-DU. These configurations support both user plane and non-user plane traffic transport on the target path.

920: the target IAB-donor-CU replies with an IAB Transport Migration Management Response message to m-CU, and this message provides mapping information about the traffic to be offloaded. This message contains layer 2 information in the topology for the target IAB-donor-CU, and the information is necessary to configure the uplink mapping of the migrating IAB node for the traffic that is indicated in 918. This message contains the Differentiated Services Code Point (DSCP) /IPv6 flow label value used to configure the downlink mapping of the traffic indicated in 918.

921: the F1-U connection from the migrating IAB node to m-CU is switched by using the new TNL address of the migrating IAB node. Based on the uplink backhaul information received from the target IAB-donor-CU in 920, m-CU provides updated uplink backhaul information about the traffic indicated in 918 to the IAB-DU of the migrating IAB node. m-CU may also update the uplink backhaul information associated with non-user plane traffic. In this step, UE-associated signaling or non-UE-associated signaling may be used at E1 and/or F1 interfaces. It is necessary to ensure that possible competition is avoided during implementation, that is, conflicting configurations cannot be executed simultaneously in UE-associated process and non-UE-associated process.

922: 918 to 921 may be repeated if necessary. This allows m-CU to request more traffic offloading, or request modification or release of offloaded traffic. The target IAB-donor-CU may reject in whole or in part the m-CU's request to increase or modify traffic offloading.

The target IAB-donor-CU may use the TRANSPORT MIGRATION MODIFICATION REQUEST message to request to modify the layer 2 transport of offloaded traffic in the topology of the target IAB-donor-CU. m-CU reconfigures the uplink backhaul mapping based on the request and confirms the modification by an IAB TRANSPORT MIGRATION MODIFICATION RESPONSE message. The target IAB-donor-CU may further reconfigure the TNL address to the migrating IAB node via the RRC.

The above signaling process only illustratively describes the embodiments of the present application, but the present application is not limited thereto, and more specific content of the signaling may be found by referring to the related art. In addition, for example, the order of execution between operations may be adjusted appropriately, and some other operations may be added or one or more operations may be removed. Those skilled in the art may make appropriate variations in accordance with the above contents, and which is not limited to the disclosure of FIG. 9 above.

In the embodiments of the present application, 916 enhances an existing IAB TRANSPORT MIGRATION MODIFICATION REQUEST message. The XnAP message is transmitted from the non-F1-terminating IAB-donor-CU of a boundary IAB node to the F1-terminating IAB-donor-CU in order to modify or release (for example, for the purpose of traffic revocation) the configuration related to migration traffic of the boundary IAB node.

For example, enhancements may be made by adding a new IE or field into the message, such as adding a new field into the Traffic To Be Released Information IE to indicate that the transmitter, namely the non-F 1-terminating donor of the IAB node, is the source donor of the IAB node, to hand over the IAB node to the target donor and notify the node ID of the target donor node or the cell ID of the target cell.

Table 1 shows an example of the Traffic To Be Released IE of the embodiments of the present application, that is enhanced Traffic To Be Released Information IE.

**Table 1**

| IE/Group Name | | | | Presence | Range | IE type and reference | Semantics description |
|---|---|---|---|---|---|---|---|
| CHOICE Traffic Release type | | | | M | | | |
| | >Full Release | | | | | | |
| | | >>All Traffic Indication | | M | | ENUMERATED (true, ..) | |
| | | >>**Target Cell Global ID** | | **O** | | **9.2.3.25** | **Includes an NR CGI** |
| | | >>**Cause** | | **O** | | **9.2.3.2** | |
| | >Partial Release | | | | | | |
| | | >>Traffic To Be Released List | | | 1 | | |
| | | | >>>Traffic To Be Released Item IE | | 1 .. <maxn oof Traf ficInde xEntrie s> | | |
| | | | >>>>Traffic Index | M | | 9.2.2.80 | |
| | | | >>>>BH Info List | O | | 9.2.2.99 | |

As shown in Table 1, a field, such as Target Cell Global ID, may be added into the Full Release group, to indicate the target cell Global Identity (CGI) of the IAB node. It may also be replaced with the Global NG-RAN Node ID indicating the target donor node, such as the Target Global NG-RAN node ID.

Because the cell global ID contains the Global NR-RAN node ID, the F1-terminating donor of the IAB node may know the target IAB donor of the IAB node from the message received. When the F1-terminating donor node of the IAB node receives the target cell ID or the node ID of the target IAB donor, the IAB transport migration management process may be carried out on the target donor node to migrate the F1 traffic of the IAB node 3 to the topology of the target donor node.

In the Full Release group, a field such as Cause may be further added, to indicate the cause for releasing all traffic. For example, the value may be HO (handover), indicating that the migrating IAB node performs inter-donor handover. A new value, such as Handover, may be defined in Cause IE of XnAP.

In some other embodiments, the first indication information is transmitted by the second donor-CU via a migration notification message in an XnAP message. Alternatively, the first donor-CU transmits a migration notification confirmation message to the second donor-CU.

The migration notification message includes a target cell global identity of the mobile node or a global node identity of a target donor node. In addition, the migration notification message includes the migration cause. The migration cause includes that the mobile node performs inter-donor handover, or that the mobile node performs inter-donor radio link failure (RLF) recovery.

The topological adaptation process of the embodiments of the present application is further illustrated by signaling interaction.

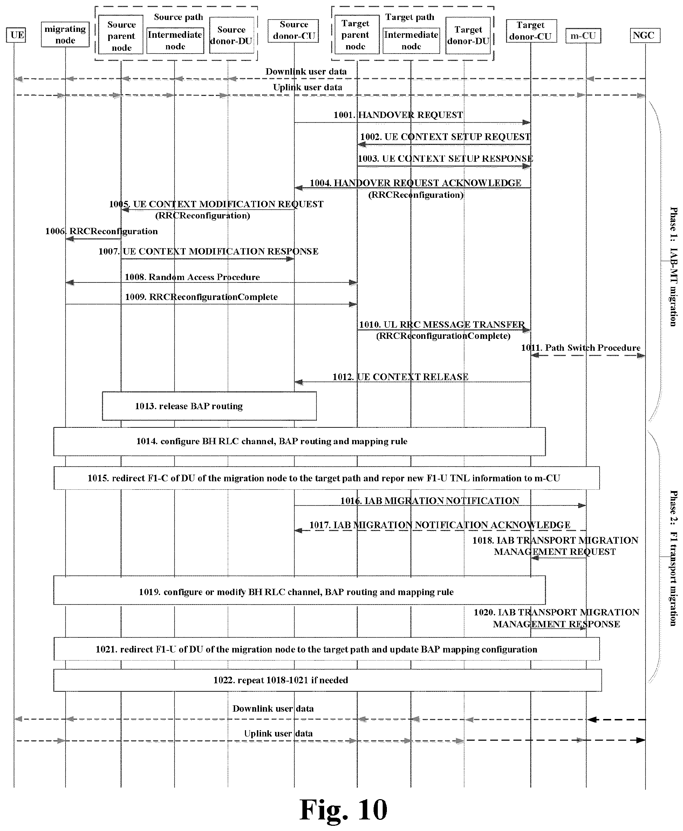

FIG. 10 is another signaling process chart of topological adaptation in the embodiments of the present application.

As shown in FIG. 10, the migrating IAB node (the aforementioned IAB node 3) has changed the non-F1-terminating donor, maintaining the F1-terminating donor. In FIG. 10, it is assumed that the migrating node has a parent node in both the source and target paths and an intermediate node between the parent node and the IAB-donor. These nodes may not exist, in which case the parent node of the migrating node is the IAB-donor.

The process shown in FIG. 10 is basically the same as that shown in FIG. 9, and the details will not be repeated. The difference is that 916 and 917 in FIG. 9 are changed to a new elementary Xn procedure (as shown in 1016 and 1017). It may be a class 1 elementary procedure or a class 2 elementary procedure. This new Xn procedure is used for the same purpose as 916 and 917 in FIG. 9, for the source IAB donor node to notify m-CU that the IAB-MT of the IAB node 3 has been switched to the target IAB donor. This process may be called the IAB Migration notification process.

As shown in FIG. 10, the non-F1-terminating IAB-donor-CU of the boundary IAB node transmits a notification message to the F1-terminating IAB-donor-CU, such as an IAB MIGRATION NOTIFICATION message. In addition to the message type, F1-terminating IAB donor UE XnAP ID, non-F1-terminating IAB donor UE XnAP ID, the message may also contain the target cell Global Identity, the cause for the notification, and so on.

Table 2 shows an example of an IE of the notification message in an embodiment of the present application.

**Table 2**

| IE/Group Name | Presence | Range | IE type and reference | Semantics description | Criticality | Assigned Criticality |
|---|---|---|---|---|---|---|
| Message Type | M | | 9.2.3.1 | | YES | reject |
| F1-Terminating IAB-donor UE XnAP ID | M | | NG-RAN node UE XnAP ID 9.2.3.16 | This IE refers to the Source NG-RAN node UE XnAP ID or to the M-NG-RAN node UE XnAP ID, or to the S-NG-RAN node UE XnAP ID. | YES | reject |
| Non-F1-Terminating IAB-donor UE XnAP ID | M | | NG-RAN node UE XnAP ID 9.2.3.16 | This IE refers to the Target NG-RAN node UE XnAP ID or to the S-NG-RAN node UE XnAP ID, or to the M-NG-RAN node UE XnAP ID. | YES | reject |
| **Target Cell Global ID** | **O** | | **9.2.3.25** | **Includes an NR CGI** | **Yes** | **reject** |
| **Cause** | **O** | | **9.2.3.2** | | **Yes** | **reject** |

As shown in Table 2, the specific contents of IE are the same as the corresponding fields in Table 1.

If it is a class 2 elementary procedure, m-CU does not need to reply to the message. If it is a class 1 elementary procedure, m-CU also needs to reply to the transmitter, such as replying an IAB MIGRATION NOTIFICATION ACKNOWLEDGE message. This message indicates that the IAB MIGRATION NOTIFICATION message has been successfully received and may also indicate to the source IAB donor node that the XnAP UE ID of the migrating node saved by the source IAB donor node may be released.

In some embodiments, the first indication information is transmitted by the mobile node via an F1AP message.

For example, the F1AP message is a gNB-DU configuration update message, and the gNB configuration update message includes the address information anchored at a donor-DU of the third donor-CU for the mobile node as well as the first indication information. For example, the F1AP message includes a target cell global identity of the mobile IAB node or a global node identity of a target donor node.

In addition, the F1AP message includes the migration cause. The migration cause includes that the mobile node performs inter-donor handover, or that the mobile node performs inter-donor radio link failure (RLF) recovery.

The topological adaptation process of the embodiments of the present application is further illustrated by signaling interaction.

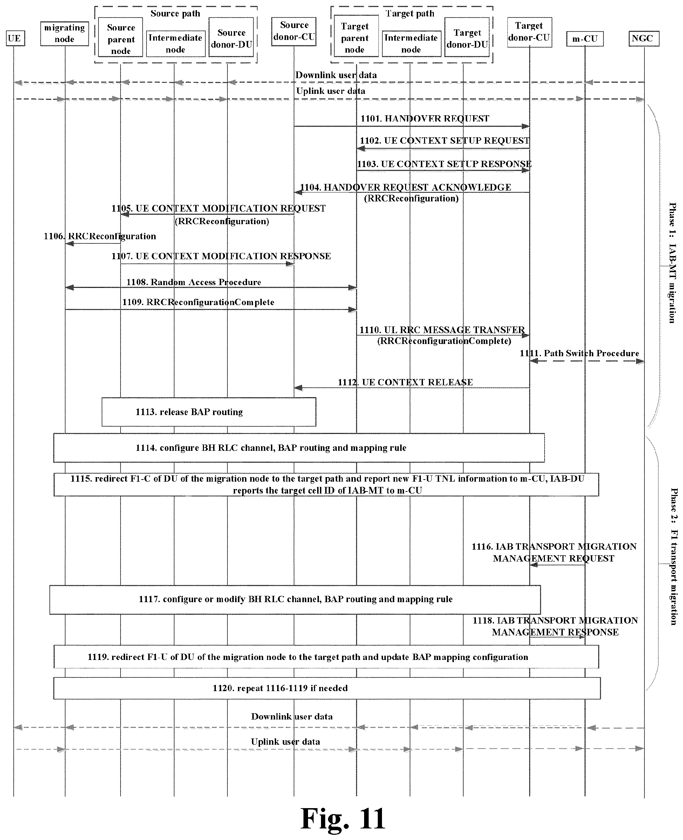

FIG. 11 is another signaling process chart of topological adaptation in the embodiments of the present application.

As shown in FIG. 11, the migrating IAB node (the aforementioned IAB node 3) has changed the non-F1-terminating donor, maintaining the F1-terminating donor. In FIG. 11, it is assumed that the migrating node has a parent node in both the source and target paths and an intermediate node between the parent node and the IAB-donor. These nodes may not exist, in which case the parent node of the migrating node is the IAB-donor.

The process shown in FIG. 11 is basically the same as that shown in FIG. 9, and the details will not be repeated. The difference is that in 1115 of FIG. 11, m-CU may be notified by DU of the boundary IAB node that MT of the boundary IAB node has been switched to a cell of the target IAB donor node. This may be achieved by the F1AP signaling from the boundary IAB-DU to m-CU. For example, the gNB-DU CONFIGURATION UPDATE message of the F1AP may be enhanced to report the target cell Global Identity of the migrating IAB-MT to m-CU.

Specifically, in 1115, the F1-C connection between the migrating IAB node and m-CU is switched to the target path by using new TNL address information of the migrating IAB node. The migrating IAB node may report the new TNL address it wants to use for F1-U traffic to m-CU via the gNB-DU CONFIGURATION UPDATE message. In the gNB-DU CONFIGURATION UPDATE message, the migrated IAB-DU may also report the target cell Global Identity of the migrating IAB-MT.

Table 3 shows an example of a modified gNB-DU CONFIGURATION UPDATE message.

**Table 3**

| IE/Group Name | Presence | Range | IE type and reference | Semantics description | Criticality | Assigned Criticality |
|---|---|---|---|---|---|---|
| Message Type | M | | 9.3.1.1 | | YES | reject |
| ... | | | | | | |
| **IAB Migration Target Cell CGI** | **O** | | **9.3.1.12** | **Includes an NR CGI of the IAB-MT's target cell.** | **Yes** | **reject** |
| **IAB Migration Cause** | **O** | | **9.3.1.2** | | **Yes** | **reject** |

As shown in Table 3, indication information of the IAB-MT target cell is added into the message, such as *IAB Migration Target Cell CGI* IE. The IAB Migration Target Cell CGI consists of Public Land Mobile Network-Identity (PLMN Identity) and cellIdentity obtained by the migrating IAB-MT from a SIB1 message of the target cell.

Similarly to the previous embodiments, this IE may also be replaced with the ID of the target donor node, such as the Global NG-RAN Node ID, and the IE is called for example the IAB Migration Target Global NG-RAN node ID. This global node ID may also be obtained by the migrating IAB-MT from the PLMN-Identity and cellIdentity in the SIB 1 message of the target cell. The message may also contain *IAB Migration Cause* IE. Similarly to the previous embodiments, new values may be defined in the Cause IE of F1AP, such as Handover.

As shown in FIG. 11, 916 and 917 in FIG. 9 or 1016 and 1017 in FIG. 10 may be removed.

Hereinbefore the topological adaptation process of the embodiments of the present application is explained by taking handover as an example, and then revocation is illustratively explained.

The IAB node may be migrated in m-CU due to traffic offloading or node mobility. Traffic offloading or mobility for the migrating IAB node during the topological adaptation in m-CU may be all revoked.

For example, the non-F1-terminating IAB-donor-CU may initiate a full traffic revocation to m-CU by performing the XnAP handover preparation procedure. When the migrating IAB-MT is switched to m-CU, the traffic of the IAB-DU of the migrating IAB node is routed via the m-CU topology. At this case, the F1-terminating donor of the migrating IAB node and the RRC terminating node are both m-CU, that is, a state of partial migration has ended.

For another example, the non-F1-terminating IAB-donor-CU may also initiate a full traffic revocation to the previous source IAB-donor-CU by performing the XnAP handover preparation procedure. This procedure is equivalent to performing the topological adaptation in m-CU again, and the procedure is consistent with that of the previous embodiments. The traffic of the IAB-DU of the migrating IAB node is routed via the previous source path again.

In some embodiments, the first donor-CU requests the third donor-CU via a transport migration management request message for releasing all or a part of offloaded traffics.

For example, m-CU may initiate a full traffic revocation by requesting the non-F1-terminating IAB-donor-CU to release all offloaded traffic. This request means transmitting an IAB TRANSPORT MIGRATION MANAGEMENT REQUEST message to the non-F1-terminating IAB-donor-CU. This message may trigger the XnAP handover preparation process from the migrating IAB-MT to m-CU.

For another example, m-CU may also request the non-F1-terminating IAB-donor-CU to release part of offloaded traffic via an IAB TRANSPORT MIGRATION MANAGEMENT REQUEST message.

Hereinafter the RLF recovery is illustratively described.

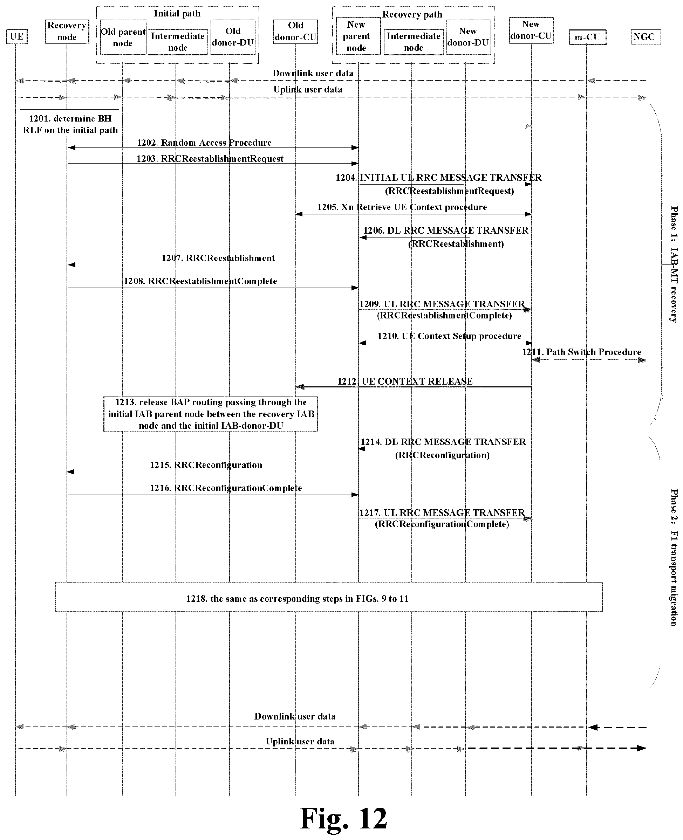

The backhaul radio link failure (RLF) recovery procedure of the IAB node in m-CU enables the IAB node to detect the backhaul RLF and recover to the parent node under another IAB-donor-CU while keeping m-CU as the F1-terminating IAB-donor-CU. Then the recovered IAB node becomes a boundary node. The RLF recovery process of IAB-MT is the same as the inter-donor backhaul RLF recovery process in relevant art, as shown in steps 1201 to 1213 in FIG. 12. During the RLF recovery process, the second donor-CU of the IAB node is also called an original donor-CU, and the third donor-CU is also called a new donor-CU.

In F1 transport migration process of a boundary IAB node, the same steps as that of the topological adaptation method in m-CU are adopted, which is consistent with the above embodiments. FIGs. 9 to 11 may all be adaptively modified into the RLF recovery process of a corresponding IAB node in m-CU.

FIG. 12 is a signaling process chart of the RLF recovery process in the embodiments of the present application. As shown in FIG. 12, the corresponding steps in 1218 are the same as the corresponding steps in FIGs. 9 to 11 (for example, 914 to 922, or 1014 to 1022, or 1114 to 1120) and will not be repeated here. The Cause value in the corresponding embodiments indicates the cause for releasing all traffic or the cause for migration. For example, the cause value of RLF recovery process may be RLF recover y, indicating that the IAB node performs inter-donor RLF recovery.

The new IAB-donor-CU may request to modify a layer 2 transport of offloaded traffic in the topology of the new IAB-donor-CU by using a TRANSPORT MIGRATION MODIFICATION REQUEST message. m-CU reconfigures uplink backhaul mapping based on the request and confirms modification by an IAB TRANSPORT MIGRATION MODIFICATION RESPONSE message. The new IAB-donor-CU may further reconfigure the TNL address for the recovered IAB node via the RRC. The traffic revocation process of the IAB node RLF recovery is the same as that of the previous migrating node.

Through the above embodiments, problems such as migration, RLF recovery and traffic revocation among non-F1 donor nodes of the IAB nodes may be solved, so as to support the IAB node mobility within the control area of m-CU and to ensure the service quality of mobile IAB nodes for UE.

The embodiments above only schematically illustrate the present application, but the present application is not limited to this, and appropriate variations may also be made on the basis of the above embodiments. For example, the above embodiments may be used separately, or one or more of the above embodiments may be combined.

As can be seen from the above embodiments, the first donor-CU receives first indication information, the first indication information including identity information related to a third donor-CU; and the first donor-CU transmits to the third donor-CU second indication information used for indicating the context of traffic according to the identity information. Therefore, mobile nodes may be supported to move in the control area without service interruption, and the quality of service of mobile nodes for user equipments is guaranteed.

### Embodiments of Second Aspect

The embodiments of the present application provide a communication method for a network node, and is explained from a second donor-CU side, and the same content as the embodiments of the first aspect will not be repeated. A first donor-CU is an F1-terminating donor-CU of a mobile node, a second donor-CU is a non-F1-terminating donor-CU before migration or radio link failure (RLF) recovery of the mobile node, and a third donor-CU is a non-F1-terminating donor-CU after migration or RLF recovery of the mobile node.

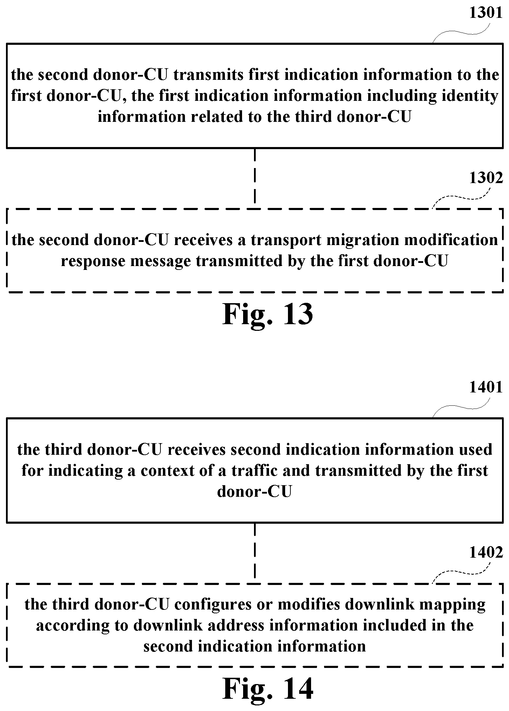

FIG. 13 is a schematic diagram of a communication method for a network node in the embodiments of the present application, as shown in FIG. 13, the method including:
1301: the second donor-CU transmits first indication information to the first donor-CU, the first indication information including identity information related to the third donor-CU.

It is worth noting that FIG. 13 above only schematically illustrates the embodiment of the present application, but the present application is not limited to this. For example, the order of execution between operations may be adjusted appropriately, and some other operations may be added or one or more operations may be removed. Those skilled in the art may make appropriate variations in accordance with the above contents, and which is not limited to the disclosure of FIG. 13 above.

In some embodiments, the first indication information is transmitted by the second donor-CU via a transport migration modification request message; as shown in FIG. 13, the method may further include:
1302: the second donor-CU receives a transport migration modification response message transmitted by the first donor-CU.

In some embodiments, the transport migration modification request message includes a target cell global identity of the mobile node or a global node identity of a target donor node.

In some embodiments, the target cell global identity of the mobile node or the global node identity of the target donor node is contained in a traffic to be released information element carried by the transport migration modification request message.

In some embodiments, the transport migration modification request message includes a traffic release cause.

In some embodiments, the traffic release cause includes that the mobile node performs inter-donor handover, or that the mobile node performs inter-donor radio link failure (RLF) recovery.

In some embodiments, the first indication information is transmitted by the second donor-CU via a migration notification message in an XnAP message.

In some embodiments, the second donor-CU receives the migration notification confirmation message transmitted by the first donor-CU.

In some embodiments, the migration notification message includes a target cell global identity of the mobile node or a global node identity of a target donor node.

In some embodiments, the migration notification message includes the migration cause.

In some embodiments, the migration cause includes that the mobile node performs inter-donor handover, or that the mobile node performs inter-donor radio link failure (RLF) recovery.

The embodiments above only schematically illustrate the present application, but the present application is not limited to this, and appropriate variations may also be made on the basis of the above embodiments. For example, the above embodiments may be used separately, or one or more of the above embodiments may be combined.

As may be seen from the above embodiments, the second donor-CU transmits first indication information to the first donor-CU, the first indication information including identity information related to the third donor-CU, wherein the identity information is used by the first donor-CU to transmit to the third donor-CU second indication information used for indicating the context of traffic. Therefore, mobile nodes may be supported to move in the control area without service interruption, and the quality of service of mobile nodes to user equipments is guaranteed.

### Embodiments of Third Aspect

The embodiments of the present application provide a communication method for a network node, and is explained from a third donor-CU side, and the same content as the embodiments of the first and second aspects will not be repeated. A first donor-CU is an F1-terminating donor-CU of a mobile node, a second donor-CU is a non-F1-terminating donor-CU before migration or radio link failure (RLF) recovery of the mobile node, and a third donor-CU is a non-F1-terminating donor-CU after migration or RLF recovery of the mobile node.

FIG. 14 is a schematic diagram of a communication method for a network node in the embodiments of the present application, as shown in FIG. 14, the method including:
1401: the third donor-CU receives second indication information used for indicating a context of a traffic and transmitted by the first donor-CU according to identity information, wherein the identity information is related to the third donor-CU and is contained in the first indication information received by the first donor-CU.

It is worth noting that FIG. 14 above only schematically illustrates the embodiments of the present application, but the present application is not limited to this. For example, the order of execution between operations may be adjusted appropriately, and some other operations may be added or one or more operations may be removed. Those skilled in the art may make appropriate variations in accordance with the above contents, and which is not limited to the disclosure of FIG. 14 above.

In some embodiments, the second indication information is transmitted via a transport migration management request message. As shown in FIG. 14, the method may further include:
1402: the third donor-CU configures or modifies downlink mapping according to downlink address information included in the second indication information.

In some embodiments, the third donor-CU transmits a transport migration management response message to the first donor-CU, the transport migration management response message including mapping information of a traffic to be offloaded and/or layer 2 information in a topology of the third donor-CU.

In some embodiments, the third donor-CU initiates a traffic revocation of the mobile termination (MT) of the mobile node switched to the first donor-CU.

In some embodiments, in the case that the mobile termination of the mobile node is switched to the first donor-CU, the traffic of the distributed unit (DU) of the mobile node is routed in the topology of the first donor-CU.

In some embodiments, the third donor-CU initiates a traffic revocation of the mobile termination of the mobile node switched to the second donor-CU.

In some embodiments, in the case that the mobile termination of the mobile node is switched to the second donor-CU, the traffic of the distributed unit of the mobile node is routed in the topology of the second donor-CU.

The embodiments above only schematically illustrate the present application, but the present application is not limited to this, and appropriate variations may also be made on the basis of the above embodiments. For example, the above embodiments may be used separately, or one or more of the above embodiments may be combined.

As can be seen from the above embodiments, the third donor-CU receives second indication information used for indicating a context of a traffic and transmitted by the first donor-CU according to identity information, wherein the identity information is related to the third donor-CU and is contained in the first indication information received by the first donor-CU. Therefore, mobile nodes may be supported to move in the control area without service interruption, and the quality of service of mobile nodes to user equipments is guaranteed.

### Embodiments of Fourth Aspect

The embodiments of the present application provide a communication method for a mobile node, and is explained from a mobile node side, and the same content as the embodiments of the first to third aspects will not be repeated. A first donor-CU is an F1-terminating donor-CU of a mobile node, a second donor-CU is a non-F1-terminating donor-CU before migration or radio link failure (RLF) recovery of the mobile node, and a third donor-CU is a non-F1-terminating donor-CU after migration or RLF recovery of the mobile node.

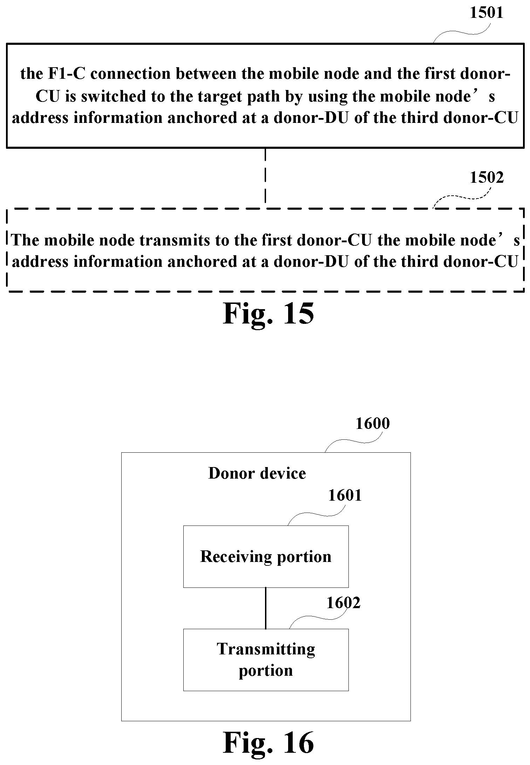

FIG. 15 is a schematic diagram of a communication method for a mobile node in the embodiments of the present application, as shown in FIG. 15, the method including:
1501: the F1-C connection between the mobile node and the first donor-CU is switched to the target path by using the address information on that the mobile node is anchored to a donor-DU of the third donor-CU.

It is worth noting that FIG. 15 above only schematically illustrates the embodiments of the present application, but the present application is not limited to this. For example, the order of execution between operations may be adjusted appropriately, and some other operations may be added or one or more operations may be removed. Those skilled in the art may make appropriate variations in accordance with the above contents, and which is not limited to the disclosure of FIG. 15 above.

In some embodiments, as shown in FIG. 15, the method may further include:
1502: the mobile node transmits to the first donor-CU the address information on that the mobile node is anchored to a donor-DU of the third donor-CU.

In some embodiments, the mobile node transmits first indication information to the first donor-CU, the first indication information including identity information related to the third donor-CU, wherein the identity information is used by the first donor-CU to transmit to the third donor-CU second indication information used for indicating the context of traffic.

In some embodiments, the F1-U connection from the mobile node to the first donor-CU is switched by using the address information on that the mobile node is anchored to a donor-DU of the third donor-CU.

In some embodiments, the mobile node receives the uplink backhaul information of the traffic transmitted by the first donor-CU.

In some embodiments, the first indication information is transmitted by the mobile node via an F1AP message.

In some embodiments, the F1AP message being a gNB-DU configuration update message, and the gNB configuration update message includes the address information on that the mobile node is anchored to a donor-DU of the third donor-CU as well as the first indication information.

In some embodiments, the F1AP message includes a target cell global identity of the mobile IAB node or a global node identity of a target donor node.

In some embodiments, the F1AP message includes the migration cause. The migration cause includes that the mobile node performs inter-donor handover, or that the mobile node performs inter-donor radio link failure (RLF) recovery.

The embodiments above only schematically illustrate the present application, but the present application is not limited to this, and appropriate variations may also be made on the basis of the above embodiments. For example, the above embodiments may be used separately, or one or more of the above embodiments may be combined.

As may be seen from the above embodiment, the F1-C connection between the mobile node and the first donor-CU is switched to the target path by using the address information on that the mobile node is anchored to a donor-DU of the third donor-CU. Therefore, mobile nodes may be supported to move in the control area without service interruption, and the quality of service of mobile nodes to user equipments is guaranteed.

### Embodiments of Fifth Aspect

The embodiments of the present application provide a donor device, and the same content as the embodiments in the first to fourth aspects will not be repeated. The device may, for example, be an IAB donor-CU in the IAB system (the first donor-CU as in the first to fourth aspects of embodiments), or may be a or some components or assemblies or modules configured in the IAB donor-CU.

The donor device is an F 1-terminating donor-CU of a mobile node, a second donor-CU is a non-F1-terminating donor-CU before migration or radio link failure (RLF) recovery of the mobile node, and a third donor-CU is a non-F1-terminating donor-CU after migration or RLF recovery of the mobile node.

FIG. 16 is a schematic diagram of a donor device in the embodiment of the present application. As shown in FIG. 16, a donor device 1600 includes:
a receiving portion 1601 configured to receive first indication information, the first indication information including identity information related to the third donor-CU; and
a transmitting portion 1602 configured to transmit second indication information for indicating a context of a traffic to the third donor-CU.

In some embodiments, the donor device is an F1-terminating donor-CU of multiple mobile nodes in a designated area, and F1 connections of the multiple mobile nodes are always terminated at the donor device.

In some embodiments, the receiving portion 1601 further receives address information on that the mobile node is anchored to a donor-DU of the third donor-CU and transmitted by the mobile node.

In some embodiments, the second indication information is transmitted via a transport migration management request message, and the second indication information includes downlink address information so that the third donor-CU configures or modifies downlink mapping.

The receiving portion 1601 further receives a transport migration management response message transmitted by the third donor-CU, the transport migration management response message including mapping information of a traffic to be offloaded and/or layer 2 information in a topology of the third donor-CU.

In some embodiments, the transmitting portion 1602 further transmits uplink backhaul information of the traffic to the mobile node.

In some embodiments, the first indication information is transmitted by the second donor-CU via a transport migration modification request message.

The transmitting portion 1602 further transmits a transport migration modification response message to the second donor-CU.

In some embodiments, the transport migration modification request message includes a target cell global identity of the mobile node or a global node identity of a target donor node.

The target cell global identity of the mobile node or the global node identity of the target donor node being contained in a traffic to be released information element carried by the transport migration modification request message.

In some embodiments, the transmission migration modification request message includes a traffic release cause.

The traffic release cause including that the mobile node performs inter-donor handover, or that the mobile node performs inter-donor radio link failure (RLF) recovery.

In some embodiments, the first indication information is transmitted by the second donor-CU via a migration notification message in an XnAP message.

The transmitting portion 1602 further transmits a migration notification confirmation message to the second donor-CU.

In some embodiments, the migration notification message includes a target cell global identity of the mobile node or a global node identity of a target donor node.

In some embodiments, the migration notification message includes a traffic release cause.

The traffic release cause including that the mobile node performs inter-donor handover, or that the mobile node performs inter-donor radio link failure (RLF) recovery.

In some embodiments, the first indication information is sent by the mobile node via an F1AP message.

The F1AP message is a gNB-DU configuration update message, and the gNB configuration update message includes the address information on that the mobile node is anchored to a donor-DU of the third donor-CU as well as the first indication information.

In some embodiments, the F1AP message includes a migration cause.

The migration cause includes that the mobile node performs inter-donor handover, or that the mobile node performs inter-donor radio link failure (RLF) recovery.

In some embodiments, the transmitting portion 1602 further requests the third donor-CU via a transport migration management request message for releasing all or a part of offloaded traffics.

The embodiments above only schematically illustrate the present application, but the present application is not limited to this, and appropriate variations may also be made on the basis of the above embodiments. For example, the above embodiments may be used separately, or one or more of the above embodiments may be combined.

It is worth noting that only the components or modules related to the present application are illustrated hereinabove, but the present application is not limited to this. The donor device 1600 of the embodiments of the present application may also include other components or modules, and the details of these components or modules may be seen by referring to the related art.

In addition, for the sake of simplicity, FIG. 16 only exemplarily shows the connection relationship or signal trend between the individual components or modules, but it should be clear to those skilled in the art that various related techniques such as bus connections may be employed. The above individual components or modules may be implemented by hardware facilities such as a processor, a memory, a transmitter, a receiver, etc., which is not limited in the present application.

As can be seen from the above embodiments, the first donor-CU receives first indication information, the first indication information including identity information related to a third donor-CU; and the first donor-CU transmits to the third donor-CU second indication information used for indicating the context of traffic according to the identity information. Therefore, mobile nodes may be supported to move in the control area without service interruption, and the quality of service of mobile nodes to user equipments is guaranteed.

### Embodiments of Sixth Aspect

The embodiments of the present application provide a donor device, and the same content as the embodiments in the first to fourth aspects will not be repeated. The device may, for example, be an IAB donor-CU in the IAB system (the second donor-CU as in the first to fourth aspects of embodiments), or may be a or some components or assemblies or modules configured in the IAB donor-CU.

A first donor-CU is an F1-terminating donor-CU of a mobile node, the donor device is a non-F1-terminating donor-CU before migration or radio link failure (RLF) recovery of the mobile node, and a third donor-CU is a non-F1-terminating donor-CU after migration or RLF recovery of the mobile node.

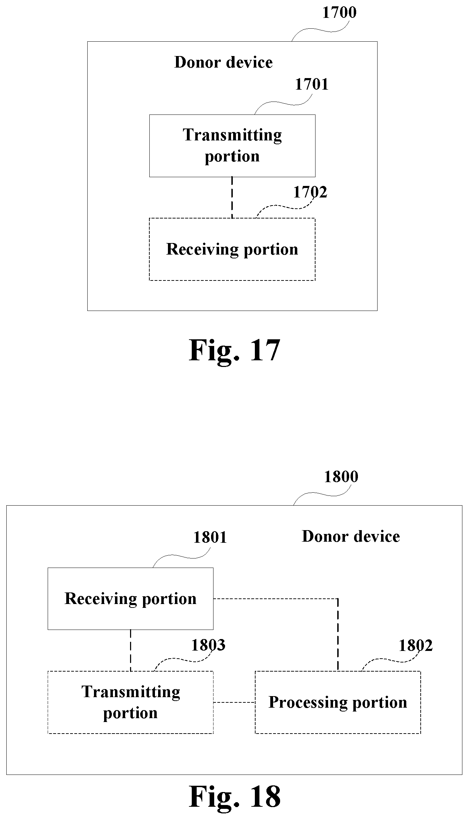

FIG. 17 is a schematic diagram of a donor device in the embodiments of the present application. As shown in FIG. 17, a donor device 1700 includes:
a transmitting portion 1701 configured to transmit first indication information to the first donor-CU, the first indication information including identity information related to the third donor-CU.

In some embodiments, the first indication information is transmitted by the second donor-CU via a transport migration modification request message; as shown in FIG. 17, the donor device 1700 may further include:
a receiving portion 1702 configured to receive a transport migration modification response message transmitted by the first donor-CU.

In some embodiments, the first indication information is transmitted by the second donor-CU via a migration notification message in an XnAP message; the receiving portion 1702 also receives a migration notification confirmation message transmitted by the first donor-CU.

The embodiments above only schematically illustrate the present application, but the present application is not limited to this, and appropriate variations may also be made on the basis of the above embodiments. For example, the above embodiments may be used separately, or one or more of the above embodiments may be combined.

It is worth noting that only the components or modules related to the present application are illustrated hereinabove, but the present application is not limited to this. The donor device 1700 of the embodiments of the present application may also include other components or modules, and the details of these components or modules may be seen by referring to the related art.

In addition, for the sake of simplicity, FIG. 17 only exemplarily shows the connection relationship or signal trend between the individual components or modules, but it should be clear to those skilled in the art that various related techniques such as bus connections may be employed. The above individual components or modules may be implemented by hardware facilities such as a processor, a memory, a transmitter, a receiver, etc., which is not limited in the present application.

As can be seen from the above embodiments, the second donor-CU transmits first indication information to the first donor-CU, the first indication information including identity information related to the third donor-CU, wherein the identity information is used by the first donor-CU to transmit to the third donor-CU second indication information used for indicating the context of traffic. Therefore, mobile nodes may be supported to move in the control area without service interruption, and the quality of service of mobile nodes to user equipments is guaranteed.

### Embodiments of Seventh Aspect

The embodiments of the present application provide a donor device, and the same content as the embodiments in the first to fourth aspects will not be repeated. The device may, for example, be an IAB donor-CU in the IAB system (the third donor-CU as in the first to fourth aspects of embodiments), or may be a or some components or assemblies or modules configured in the IAB donor-CU.

A first donor-CU is an F1-terminating donor-CU of a mobile node, a second donor-CU is a non-F1-terminating donor-CU before migration or radio link failure (RLF) recovery of the mobile node, and the donor device is a non-F1-terminating donor-CU after migration or RLF recovery of the mobile node.

FIG. 18 is a schematic diagram of a donor device in the embodiments of the present application. As shown in FIG. 18, a donor device 1800 includes:
a receiving portion 1801 configured to receive second indication information used for indicating a context of a traffic and transmitted by the first donor-CU according to identity information,
wherein the identity information is related to the third donor-CU and is contained in the first indication information received by the first donor-CU.

In some embodiments, the second indication information is transmitted via a transport migration management request message. As shown in FIG. 18, the donor device 1800 may further include:
a processing portion 1802 configured to configure or modify downlink mapping according to downlink address information included in the second indication information.

In some embodiments, as shown in FIG. 18, the donor device 1800 may further include:
a transmitting portion 1803 configured to transmit a transport migration management response message to the first donor-CU, the transport migration management response message including mapping information of a traffic to be offloaded and/or layer 2 information in a topology of the third donor-CU.

The embodiments above only schematically illustrate the present application, but the present application is not limited to this, and appropriate variations may also be made on the basis of the above embodiments. For example, the above embodiments may be used separately, or one or more of the above embodiments may be combined.

It is worth noting that only the components or modules related to the present application are illustrated hereinabove, but the present application is not limited to this. The donor device 1800 of the embodiments of the present application may also include other components or modules, and the details of these components or modules may be seen by referring to the related art.

In addition, for the sake of simplicity, FIG. 18 only exemplarily shows the connection relationship or signal trend between the individual components or modules, but it should be clear to those skilled in the art that various related techniques such as bus connections may be employed. The above individual components or modules may be implemented by hardware facilities such as a processor, a memory, a transmitter, a receiver, etc., which is not limited in the present application.

As can be seen from the above embodiments, the third donor-CU receives second indication information used for indicating a context of a traffic and transmitted by the first donor-CU according to identity information, wherein the identity information is related to the third donor-CU and is contained in the first indication information received by the first donor-CU. Therefore, mobile nodes may be supported to move in the control area without service interruption, and the quality of service of mobile nodes to user equipments is guaranteed.

### Embodiments of Eighth Aspect

The embodiments of the present application provide a mobile node, and the same content as the embodiments in the first to fourth aspects will not be repeated. The mobile node may, for example, be an IAB node in the IAB system (the mobile IAB node as in the first to fourth aspects of embodiments), or may be a or some components or assemblies or modules configured in the IAB node.

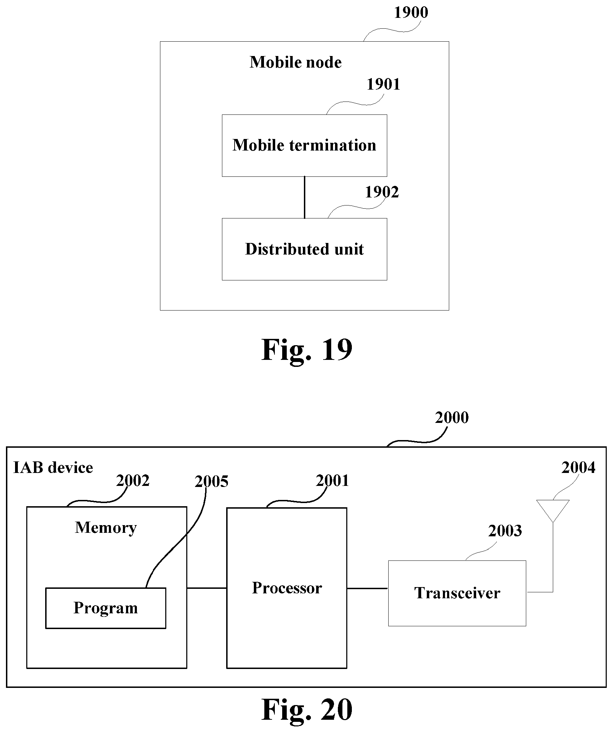

FIG. 19 is a schematic diagram of a mobile node in the embodiments of the present application. As shown in FIG. 19, a mobile node 1900 includes a mobile termination (MT) 1901 and a distributed unit (DU) 1902. The mobile termination (MT) 1901 of the mobile node performs handover or RLF recovery from the second donor-CU to the third donor-CU.

The F1-C connection between the distributed unit (DU) 1902 of the mobile node and the first donor-CU is switched to the target path by using the address information on that the mobile node is anchored to a donor-DU of the third donor-CU.

In some embodiments, the distributed unit (DU) 1902 of the mobile node transmits to the first donor-CU the address information on that the mobile node is anchored to a donor-DU of the third donor-CU.

In some embodiments, the distributed unit (DU) 1902 of the mobile node transmits first indication information to the first donor-CU, the first indication information including identity information related to the third donor-CU.

In some embodiments, the F1-U connection from the distributed unit (DU) 1902 of the mobile node to the first donor-CU is switched by using the address information on that the mobile node is anchored to a donor-DU of the third donor-CU.

In some embodiments, the distributed unit (DU) 1902 of the mobile node receives the uplink backhaul information of the traffic transmitted by the first donor-CU.

In some embodiments, the first indication information is transmitted by the mobile node via an F1AP message.

In some embodiments, the F1AP message being a gNB-DU configuration update message, and the gNB configuration update message includes the address information on that the mobile node is anchored to a donor-DU of the third donor-CU as well as the first indication information.

In some embodiments, the F1AP message includes a target cell global identity of the mobile IAB node or a global node identity of a target donor node.

In some embodiments, the F1AP message includes a migration cause.

In some embodiments, the migration cause includes that the mobile node performs inter-donor handover, or that the mobile node performs inter-donor radio link failure (RLF) recovery.

The embodiments above only schematically illustrate the present application, but the present application is not limited to this, and appropriate variations may also be made on the basis of the above embodiments. For example, the above embodiments may be used separately, or one or more of the above embodiments may be combined.

It is worth noting that only the components or modules related to the present application are illustrated hereinabove, but the present application is not limited to this. The mobile node 1900 of the embodiments of the present application may also include other components or modules, and the details of these components or modules may be seen by referring to the related art.

In addition, for the sake of simplicity, FIG. 19 only exemplarily shows the connection relationship or signal trend between the individual components or modules, but it should be clear to those skilled in the art that various related techniques such as bus connections may be employed. The above individual components or modules may be implemented by hardware facilities such as a processor, a memory, a transmitter, a receiver, etc., which is not limited in the present application.

As can be seen from the above embodiments, the F1-C connection between the mobile node and the first donor-CU is switched to the target path by using the address information on that the mobile node is anchored to a donor-DU of the third donor-CU. Therefore, mobile nodes may be supported to move in the control area without service interruption, and the quality of service of mobile nodes to user equipments is guaranteed.

### Embodiments of Ninth Aspect

The embodiments of the present application provide a communication system including a donor device and a mobile node (e.g., IAB-node); the network architecture and specific content of the donor device and the IAB node may be seen by referring to the related art, and the description thereof is omitted here.

In some embodiments, the communication system includes: a first donor-CU, a second donor-CU, a third donor-CU, donor-DU of each donor-CU, and a mobile node. Each donor-DU may perform operations corresponding to each donor-CU and mobile node, and details may be seen by referring to the related art, and are omitted here.

A first donor-CU is an F 1-terminating donor-CU of a mobile node, a second donor-CU is a non-F1-terminating donor-CU before migration or radio link failure (RLF) recovery of the mobile node, and a third donor-CU is a non-F1-terminating donor-CU after migration or RLF recovery of the mobile node.

The first donor-CU receives first indication information, the first indication information including identity information related to a third donor-CU; and the first donor-CU transmits to the third donor-CU second indication information used for indicating the context of traffic.

The second donor-CU transmits first indication information to the first donor-CU, the first indication information including identity information related to the third donor-CU.

The third donor-CU receives second indication information used for indicating a context of a traffic and transmitted by the first donor-CU according to identity information, wherein the identity information is related to the third donor-CU and is contained in the first indication information received by the first donor-CU.

The F1-C connection between the mobile node and the first donor-CU is switched to the target path by using the address information on that the mobile node is anchored to a donor-DU of the third donor-CU.

The embodiment of the present application further provides an IAB device, which may be an IAB donor device or an IAB node (migrating node or child node).

FIG. 20 is a schematic diagram of an IAB device in the embodiments of the present application. As shown in FIG. 20, an IAB device 2000 may include a processor (such as a central processing unit (CPU)) 2001 and a memory 2002; the memory 2002 is coupled to the processor 2001. The memory 2002 may store various data and also may store the information processing program 2005, and the program 2005 is executed under the control of the processor 2001.

For example, the processor 2001 may be configured to execute the program to implement the communication method for a network node as described in the embodiments of the first aspect. For example, the processor 2001 may be configured to perform the following control of: receiving first indication information, the first indication information including identity information related to a third donor-CU; and transmitting to the third donor-CU second indication information used for indicating the context of traffic.

For example, the processor 2001 may be configured to execute the program to implement the communication method for a network node as described in the embodiments of the second aspect. For example, the processor 2001 may be configured to perform the following control of: transmitting first indication information to the first donor-CU, the first indication information including identity information related to a third donor-CU.

For example, the processor 2001 may be configured to execute the program to implement the communication method for a network node as described in the embodiments of the third aspect. For example, the processor 2001 may be configured to perform the following control of: receiving second indication information used for indicating a context of a traffic and transmitted by the first donor-CU according to identity information, wherein the identity information is related to the third donor-CU and is contained in the first indication information received by the first donor-CU.

For example, the processor 2001 may be configured to execute the program to implement the communication method for a mobile node as described in the embodiments of the third aspect. For example, the processor 2001 may be configured to perform the following control of: the F1-C connection with the first donor-CU is switched to the target path by using the address information on that the mobile node is anchored to a donor-DU of the third donor-CU.

In addition, as shown in FIG. 20, the IAB device 2000 may further include: a transceiver 2003 and an antenna 2004, etc., wherein the functions of the above components are similar to the relevant art, and will not be repeated here. It is worth noting that the IAB device 2000 is not necessarily required to include all of the components shown in FIG. 20; in addition, the IAB device 2000 may further include components not shown in FIG. 20, with reference to the relevant art.

The embodiments of the present application further provide a computer readable program which, when being executed in the IAB device, causes the computer to execute, in the IAB device, the communication method for a network node of the embodiments of the first to third aspects or the communication method for a mobile node of the embodiment of the fourth aspect.

The embodiments of the present application further provide a storage medium storing a computer readable program which causes the computer to execute, in an IAB device, the communication method for a network node of the embodiments of the first to third aspects or the communication method for a mobile node of the embodiment of the fourth aspect.

The above devices and methods of the present application may be implemented by hardware or by hardware combined with software. The present application relates to a computer readable program which, when being executed by a logic unit, enables the logic unit to implement the devices or components mentioned above, or enables the logic unit to implement the methods or steps described above. The logic unit is, for example, a field programmable logic unit, a microprocessor, a processor used in the computer, etc. The present application also relates to storage medium for storing the above programs, such as a hard disk, a magnetic disk, a compact disc, a DVD, a flash memory, etc.

The method/device described in conjunction with the embodiments of the present application may be directly embodied as hardware, a software module executed by the processor, or a combination of both. For example, one or more of the functional block diagrams and/or combination thereof shown in the drawing may correspond to both software modules and hardware modules of the computer program flow. These software modules may correspond to the steps shown in the drawings respectively. These hardware modules may be realized, for example, by solidifying these software modules using field programmable gate arrays (FPGA).

The software module may reside in an RAM memory, a flash memory, an ROM memory, an EPROM memory, an EEPROM memory, a register, a hard disk, a removable disk, a CD-ROM, or a storage medium in any other form known in the art. A storage medium may be coupled to a processor so that the processor may read information from the storage medium and write information to the storage medium; or the storage medium may be a constituent part of the processor. The processor and the storage medium may be located in the ASIC. The software module may be stored in the memory of the mobile termination or in a memory card that may be inserted into the mobile termination. For example, if a device (such as a mobile termination) uses a large-capacity MEGA-SIM card or a large-capacity flash memory device, the software module may be stored in the MEGA-SIM card or the large-capacity flash memory device.

One or more of the functional blocks and/or combination thereof shown in the drawing may be implemented as a general-purpose processor, a digital signal processor (DSP), an application-specific integrated circuit (ASIC), a field programmable gate array (FPGA) or other programmable logic device, a discrete gate or a transistor logic device, a discrete hardware component, or any appropriate combination thereof, for performing the functions described in the present application. One or more of the functional blocks and/or combination thereof shown in the drawing may also be implemented as combination of computing devices, such as combination of DSP and a microprocessor, multiple microprocessors, one or more microprocessors combined with DSP communication, or any other such configuration.

The present application is described in combination with specific embodiments hereinabove, but a person skilled in the art should know clearly that the description is exemplary, but not limitation to the protection scope of the present application. A person skilled in the art may make various variations and modifications to the present application according to spirit and principle of the application, and these variations and modifications should also be within the scope of the present application.

With respect to the above-mentioned embodiments disclosed in the embodiments, the following supplements are further disclosed:
1. A communication method for a network node, wherein a first donor-CU is an F1-terminating donor-CU of a mobile node, a second donor-CU is a non-F1-terminating donor-CU before migration or radio link failure (RLF) recovery of the mobile node, and a third donor-CU is a non-F1-terminating donor-CU after migration or RLF recovery of the mobile node;
   the method including:
   the first donor-CU receives first indication information, the first indication information including identity information related to the third donor-CU; and
   the first donor-CU transmits second indication information for indicating a context of a traffic to the third donor-CU.
2. The method according to the supplement 1, wherein the first donor-CU is an F1-terminating donor-CU of a plurality of mobile nodes in a designated area; the F1 connection of the plurality of mobile nodes always terminates at the first donor-CU.
3. The method according to the supplement 1 or 2, wherein the method further includes:
   the first donor-CU receives address information on that the mobile node is anchored to a donor-DU of the third donor-CU and transmitted by the mobile node.
4. The method according to any of the supplements 1 to 3, wherein the second indication information is transmitted via a transport migration management request message, and the second indication information includes downlink address information so that the third donor-CU configures or modifies downlink mapping.
5. The method according to the supplement 4, wherein the method further includes:
   the first donor-CU receives a transport migration management response message transmitted by the third donor-CU, the transport migration management response message including mapping information of a traffic to be offloaded and/or layer 2 information in a topology of the third donor-CU.
6. The method according to any of the supplements 1 to 5, wherein the method further includes:
   the first donor-CU transmits uplink backhaul information of the traffic to the mobile node.
7. The method according to any of the supplements 1 to 6, wherein the first indication information is transmitted by the second donor-CU via a transport migration modification request message; the method further includes:
   the first donor-CU transmits a transport migration modification response message to the second donor-CU.
8. The method according to the supplement 7, wherein the transport migration modification request message includes a target cell global identity of the mobile node or a global node identity of a target donor node.
9. The method according to the supplement 8, wherein the target cell global identity of the mobile node or the global node identity of the target donor node is contained in a traffic to be released information element carried by the transport migration modification request message.
10. The method according to any of the supplements 7 to 9, wherein the transport migration modification request message includes a traffic release cause.
11. The method according to the supplement 10, wherein the traffic release cause includes that the mobile node performs inter-donor handover, or that the mobile node performs inter-donor radio link failure (RLF) recovery.
12. The method according to any of the supplements 1 to 6, wherein the first indication information is transmitted by the second donor-CU via a migration notification message in an XnAP message.
13. The method according to the supplement 12, wherein the method further includes:
   the first donor-CU transmits a migration notification confirmation message to the second donor-CU.
14. The method according to the supplement 12 or 13, wherein the migration notification message includes a target cell global identity of the mobile node or a global node identity of a target donor node.
15. The method according to any of the supplements 12 to 14, wherein the migration notification message includes a migration cause.
16. The method according to the supplement 15, wherein the migration cause includes that the mobile node performs inter-donor handover, or that the mobile node performs inter-donor radio link failure (RLF) recovery.
17. The method according to any of the supplements 1 to 6, wherein the first indication information is sent by the mobile node via an F1AP message.
18. The method according to the supplement 17, wherein the F1AP message being a gNB-DU configuration update message, and the gNB configuration update message includes the address information on that the mobile node is anchored to a donor-DU of the third donor-CU as well as the first indication information.
19. The method according to the supplement 17 or 18, wherein the F1AP message includes a target cell global identity of the mobile IAB node or a global node identity of a target donor node.
20. The method according to any of the supplements 17 to 19, wherein the F1AP message includes a migration cause.
21. The method according to the supplement 20, wherein the migration cause includes that the mobile node performs inter-donor handover, or that the mobile node performs inter-donor radio link failure (RLF) recovery.
22. The method according to any of the supplements 1 to 21, wherein the method further includes:
   the first donor-CU requests the third donor-CU via a transport migration management request message for releasing all or a part of offloaded traffics.
23. A communication method for a network node, wherein a first donor-CU is an F1-terminating donor-CU of a mobile node, a second donor-CU is a non-F1-terminating donor-CU before migration or radio link failure (RLF) recovery of the mobile node, and a third donor-CU is a non-F1-terminating donor-CU after migration or RLF recovery of the mobile node;
   the method including:
   the third donor-CU receives second indication information used for indicating a context of a traffic and transmitted by the first donor-CU according to identity information;
   wherein the identity information is related to the third donor-CU and is contained in the first indication information received by the first donor-CU.
24. The method according to the supplement 23, wherein the second indication information is transmitted via a transport migration management request message, the method further including:
   the third donor-CU configures or modifies downlink mapping according to downlink address information included in the second indication information.
25. The method according to the supplement 24, wherein the method further includes:
   the third donor-CU transmits a transport migration management response message to the first donor-CU, the transport migration management response message including mapping information of a traffic to be offloaded and/or layer 2 information in a topology of the third donor-CU.
26. The method according to any of the supplements 23 to 25, wherein the method further includes:
   the third donor-CU initiates a traffic revocation of the mobile termination (MT) of the mobile node switched to the first donor-CU.
27. The method according to the supplement 26, wherein in the case that the mobile termination of the mobile node is switched to the first donor-CU, the traffic of the distributed unit (DU) of the mobile node is routed in the topology of the first donor-CU.
28. The method according to any of the supplements 23 to 25, wherein the method further includes:
   the third donor-CU initiates a traffic revocation of the mobile termination of the mobile node switched to the second donor-CU.
29. The method according to the supplement 28, wherein in the case that the mobile termination of the mobile node is switched to the second donor-CU, the traffic of the distributed unit of the mobile node is routed in the topology of the second donor-CU.
30. A communication method for a network node, wherein a first donor-CU is an F1-terminating donor-CU of a mobile node, a second donor-CU is a non-F1-terminating donor-CU before migration or radio link failure (RLF) recovery of the mobile node, and a third donor-CU is a non-F1-terminating donor-CU after migration or RLF recovery of the mobile node;
   the method including:
   the second donor-CU transmits first indication information to the first donor-CU, the first indication information including identity information related to the third donor-CU,
   wherein the identity information is used by the first donor-CU to transmit to the third donor-CU second indication information used for indicating the context of traffic.
31. The method according to the supplement 30, wherein the first indication information is transmitted by the second donor-CU via a transport migration modification request message; the method further includes:
   the second donor-CU receives a transport migration modification response message transmitted by the first donor-CU.
32. The method according to the supplement 31, wherein the transport migration modification request message includes a target cell global identity of the mobile node or a global node identity of a target donor node.
33. The method according to the supplement 32, wherein the target cell global identity of the mobile node or the global node identity of the target donor node is contained in a traffic to be released information element carried by the transport migration modification request message.
34. The method according to any of the supplements 31 to 33, wherein the transport migration modification request message includes a traffic release cause.
35. The method according to the supplement 34, wherein the traffic release cause includes that the mobile node performs inter-donor handover, or that the mobile node performs inter-donor radio link failure (RLF) recovery.
36. The method according to the supplement 30, wherein the first indication information is transmitted by the second donor-CU via a migration notification message in an XnAP message.
37. The method according to the supplement 36, wherein the method further includes:
   the second donor-CU receives the migration notification confirmation message transmitted by the first donor-CU.
38. The method according to the supplement 36 or 37, wherein the migration notification message includes a target cell global identity of the mobile node or a global node identity of a target donor node.
39. The method according to any of the supplements 36 to 38, wherein the migration notification message includes a migration cause.
40. The method according to the supplement 39, wherein the migration cause includes that the mobile node performs inter-donor handover, or that the mobile node performs inter-donor radio link failure (RLF) recovery.
41. A communication method for a mobile node, wherein a first donor-CU is an F1-terminating donor-CU of a mobile node, a second donor-CU is a non-F1-terminating donor-CU before migration or radio link failure (RLF) recovery of the mobile node, and a third donor-CU is a non-F1-terminating donor-CU after migration or RLF recovery of the mobile node;
   the method including:
   the F1-C connection between the mobile node and the first donor-CU is switched to the target path by using the address information on that the mobile node is anchored to a donor-DU of the third donor-CU.
42. The method according to the supplement 41, wherein the method further includes:
   the mobile node transmits to the first donor-CU the address information on that the mobile node is anchored to a donor-DU of the third donor-CU.
43. The method according to the supplement 41 or 42, wherein the method further includes:
   the mobile node transmits first indication information to the first donor-CU, the first indication information including identity information related to the third donor-CU,
   wherein the identity information is used by the first donor-CU to transmit to the third donor-CU second indication information used for indicating the context of traffic.
44. The method according to any of the supplements 41 to 43, wherein the method further includes:
   the F1-U connection from the mobile node to the first donor-CU is switched by using the address information on that the mobile node is anchored to a donor-DU of the third donor-CU.
45. The method according to any of the supplements 41 to 44, wherein the method further includes:
   the mobile node receives the uplink backhaul information of the traffic transmitted by the first donor-CU.
46. The method according to the supplement 43, wherein the first indication information is sent by the mobile node via an F1AP message.
47. The method according to the supplement 46, wherein the F1AP message being a gNB-DU configuration update message, and the gNB configuration update message includes the address information on that the mobile node is anchored to a donor-DU of the third donor-CU as well as the first indication information.
48. The method according to the supplement 46 or 47, wherein the F1AP message includes a target cell global identity of the mobile IAB node or a global node identity of a target donor node.
49. The method according to any of the supplements 46 to 48, wherein the F1AP message includes a migration cause.
50. The method according to the supplement 49, wherein the migration cause includes that the mobile node performs inter-donor handover, or that the mobile node performs inter-donor radio link failure (RLF) recovery.
51. A mobile node including a memory storing a computer program and a processor configured to execute the computer program to implement the communication method for a mobile node according to any of the supplements 41 to 50.
52. A donor device including a memory storing a computer program and a processor configured to execute the computer program to implement the communication method for a network node according to any of the supplements 1 to 40.
53. A communication system including a first donor-CU, a second donor-CU, a third donor-CU and a mobile node; the first donor-CU is an F1-terminating donor-CU of a mobile node, the second donor-CU is a non-F1-terminating donor-CU before migration or radio link failure (RLF) recovery of the mobile node, and the third donor-CU is a non-F1-terminating donor-CU after migration or RLF recovery of the mobile node;
   the first donor-CU receives first indication information, the first indication information including identity information related to a third donor-CU; and the first donor-CU transmits to the third donor-CU second indication information used for indicating the context of traffic;
   the second donor-CU transmits first indication information to the first donor-CU, the first indication information including identity information related to the third donor-CU;
   the third donor-CU receives second indication information used for indicating a context of a traffic and transmitted by the first donor-CU according to identity information; wherein the identity information is related to the third donor-CU and is contained in the first indication information received by the first donor-CU;
   the F1-C connection between the mobile node and the first donor-CU is switched to the target path by using the address information on that the mobile node is anchored to a donor-DU of the third donor-CU.

## Claims

1. A donor device, wherein the donor device is an F1-terminating donor-CU of a mobile node, a second donor-CU is a non-F1-terminating donor-CU before migration or radio link failure recovery of the mobile node, a third donor-CU is a non-F1-terminating donor-CU after migration or radio link failure recovery of the mobile node;
and the donor device comprises:
a receiving portion configured to receive first indication information, the first indication information comprising identity information related to the third donor-CU; and
a transmitting portion configured to transmit second indication information for indicating a context of a traffic to the third donor-CU.

2. The donor device according to claim 1, wherein the donor device is an F1-terminating donor-CU of multiple mobile nodes in a designated area, and F1 connections of the multiple mobile nodes are always terminated at the donor device.

3. The donor device according to claim 1, wherein the receiving portion further receives address information of the mobile node anchored to a donor-DU of the third donor-CU and transmitted by the mobile node.

4. The donor device according to claim 1, wherein the second indication information is transmitted via a transport migration management request message, and the second indication information comprises downlink address information so that the third donor-CU configures or modifies downlink mapping;
and the receiving portion further receives a transport migration management response message transmitted by the third donor-CU, the transport migration management response message comprising mapping information of a traffic to be offloaded and/or layer 2 information in a topology of the third donor-CU.

5. The donor device according to claim 1, wherein the transmitting portion further transmits uplink backhaul information of a traffic to the mobile node.

6. The donor device according to claim 1, wherein the first indication information is transmitted by the second donor-CU via a transport migration modification request message;
and the transmitting portion further transmits a transport migration modification response message to the second donor-CU.

7. The donor device according to claim 6, wherein the transport migration modification request message comprises a target cell global identity of the mobile node or a global node identity of a target donor node,
the target cell global identity of the mobile node or the global node identity of the target donor node being contained in a traffic to be released information element carried by the transport migration modification request message.

8. The donor device according to claim 6, wherein the transport migration modification request message comprises a traffic release cause,
the traffic release cause comprising that the mobile node performs inter-donor handover, or that the mobile node performs inter-donor radio link failure recovery.

9. The donor device according to claim 1, wherein the first indication information is transmitted by the second donor-CU via a migration notification message in an XnAP message.

10. The donor device according to claim 9, wherein the migration notification message comprises a target cell global identity of the mobile node or a global node identity of a target donor node.

11. The donor device according to claim 9, wherein the migration notification message comprises a migration cause,
the migration cause comprising that the mobile node performs inter-donor handover, or that the mobile node performs inter-donor radio link failure recovery.

12. The donor device according to claim 1, wherein the first indication information is transmitted by the mobile node via an F1AP message, the F1AP message being a gNB-DU configuration update message.

13. The donor device according to claim 12, wherein the F1AP message comprises a migration cause,
the migration cause comprising that the mobile node performs inter-donor handover, or that the mobile node performs inter-donor radio link failure recovery.

14. The donor device according to claim 1, wherein,
the transmitting portion further requests the third donor-CU via a transport migration management request message for releasing all or a part of offloaded traffics.

15. A donor device, wherein a first donor-CU is an F1-terminating donor-CU of a mobile node, the donor device is a non-F 1 terminating donor-CU before migration or radio link failure recovery of the mobile node, and a third donor-CU is a non-F1-terminating donor-CU after migration or radio link failure recovery of the mobile node;
and the donor device comprises:
a transmitting portion configured to transmit first indication information to the first donor-CU, the first indication information comprising identity information related to the third donor-CU.

16. The donor device according to claim 15, wherein the first indication information is transmitted by the donor device via a transport migration modification request message, and the donor device further comprises:
a receiving portion configured to receive a transport migration modification response message transmitted by the first donor-CU.

17. The donor device according to claim 15, wherein the first indication information is transmitted by the donor device via a migration notification message in an XnAP message,
and the donor device further comprises:
a receiving portion configured to receive a migration notification confirmation message transmitted by the first donor-CU.

18. A donor device, wherein a first donor-CU is an F1-terminating donor-CU of a mobile node, a second donor-CU is a non-F1-terminating donor-CU before migration or radio link failure recovery of the mobile node, the donor device is a non-F1-terminating donor-CU after migration or radio link failure recovery of the mobile node,
and the donor device comprises:
a receiving portion configured to receive second indication information used for indicating a context of a traffic and transmitted by the first donor-CU according to identity information,
wherein the identity information is related to the donor device and is contained in the first indication information received by the first donor-CU.

19. The donor device according to claim 18, wherein the second indication information is transmitted via a transport migration management request message, and the donor device further comprises:
a processing portion configured to configure or modify downlink mapping according to downlink address information included in the second indication information.

20. The donor device according to claim 19, wherein the donor device further comprises:
a transmitting portion configured to transmit a transport migration management response message to the first donor-CU, the transport migration management response message comprising mapping information of a traffic to be offloaded and/or layer 2 information in a topology of the donor device.
